# EUROPEAN PATENT APPLICATION

(11) **EP 4 764 661 A2**
(43) Date of publication of application: **24.06.2026**
(21) Application number: 25223888.6
(22) Date of filing: 16.12.2025
(51) Int. Cl.: G02B 27/01

(54) **HOLOGRAPHIC DISPLAY FOR PRESCRIPTION LENSES**

(30) Priority: 19.12.2024 US 202463736435 P; 11.11.2025 US 202519385352
(71) Applicant: Meta Platforms Technologies, LLC, Menlo Park, CA 94025 (US)
(72) Inventor: JORABCHI, Kavous, Menlo Park, 94025 (US); WHEELWRIGHT, Brian, Menlo Park, 94025 (US); AMIRSOLAIMANI, Babak, Menlo Park, 94025 (US); FRIEDMAN, Brandon Michael Hellman, Menlo Park, 94025 (US)
(74) Representative: Murgitroyd & Company

(57) **Abstract**

A display system includes an illumination source configured to emit light, a lens having a curved surface, and a holographic optical element having a vision correction prescription of a user disposed over the curved surface of the lens to form a diffractive-refractive surface, where the light emitted from the illumination source is redirected by the diffractive-refractive surface to form a virtual image to be viewed by the user, the light incorporating the vision correction prescription.

## Description

### FIELD

The disclosure relates to display systems and finds particular, but not exclusive, utility in relation to virtual reality and augmented reality devices and headsets.

### BACKGROUND

Virtual reality (VR) and augmented reality (AR) eyewear devices and headsets enable users to experience events, such as interactions with people in a computer-generated simulation of a three-dimensional world or viewing data superimposed on a real-world view. Superimposing information onto a field of view may be achieved through an optical head-mounted display (OHMD) or by using embedded wireless glasses with a transparent heads-up display (HUD) or augmented reality overlay. VR/AR eyewear devices and headsets may be used for a variety of purposes. Governments may use such devices for military training, medical professionals may use such devices to simulate surgery, and engineers may use such devices as design visualization aids.

### SUMMARY

According to a first aspect, there is provided a display system comprising: an illumination source configured to emit light; a lens comprising a curved surface; and a holographic optical element incorporated into the lens, wherein the holographic optical element forms a diffractive-refractive surface and comprises a vision correction prescription of a user, and the light emitted from the illumination source is redirected by the diffractive-refractive surface to form a virtual image to be viewed by the user, the light incorporating the vision correction prescription.

In some embodiments, the illumination source comprises an array of illumination sources.

In some embodiments, the illumination source is located outside of a field of view of the user wearing the display system.

In some embodiments, the holographic optical element comprises at least one of a point-source hologram, an etendue expansion hologram, a set of multiplexed holograms, a layered stack of multiple holograms, or a patterned array of multiple holograms.

In some embodiments, the holographic optical element is disposed over an outer surface of the lens.

In some embodiments, the holographic optical element comprises a photosensitive holographic layer.

In some embodiments, the holographic optical element is encoded with prescription data specific to the user and is fabricated based on an ophthalmic measurement of a refractive error of the user.

In some embodiments, the holographic optical element is written with a spatially varying prescription profile to provide multifocal or progressive vision correction.

In some embodiments, the vision correction prescription incorporated in the holographic optical element is configured to compensate for at least one of myopia, hyperopia, astigmatism, or presbyopia of the user.

In some embodiments, the vision correction prescription is integrated into the holographic optical element after lamination onto the lens, such that the virtual image presented to the user is optically corrected according to the user's prescription.

In some embodiments, the virtual image comprises at least one of content defined by a distribution of the illumination source, or content defined by an encoding of the holographic optical element.

According to a further aspect, there is provided a holographic exposure system comprising: an illumination source emitting light; a beamsplitter configured to split the emitted light into a first optical path comprising first prescription adjustment optics, and a second optical path comprising second prescription adjustment optics; and a curved holographic optical element located within both the first optical path and the second optical path, wherein the light split by the beamsplitter propagates through independently configured first prescription adjustment optics and second prescription adjustment optics to illuminate the curved holographic optical element and record a hologram in the holographic optical element, the hologram including a vision correction prescription based on the configuration of the first prescription adjustment optics and the configuration of the second prescription adjustment optics.

In some embodiments, the first prescription adjustment optics and the second prescription adjustment optics comprise equivalent prescription adjustment optics.

In some embodiments, the curved holographic optical element comprises a photosensitive holographic film.

In some embodiments, the curved holographic optical element is incorporated into a lens.

According to a further aspect, there is provided a display system comprising: a lens having a curved surface; a holographic optical element incorporated into the lens; an illumination source configured to emit light toward the lens; a beamsplitter positioned to receive light from the illumination source and divide the light into a first optical path and a second optical path; a first set of prescription adjustment optics positioned along the first optical path; and a second set of prescription adjustment optics positioned along the second optical path, wherein the holographic optical element is configured to record a hologram based on light received from both the first and second optical paths, the hologram incorporating vision correction prescription data specific to a user.

In some embodiments, the lens comprises a non-planar geometry selected to match prescription requirements of the user, and the holographic optical element conforms to the curved surface of the lens.

In some embodiments, the beamsplitter is positioned between the illumination source and the lens, and the beamsplitter is configured to divide the emitted light into two spatially separated optical paths directed toward distinct regions of the holographic optical element.

In some embodiments, the holographic optical element is laminated directly onto the curved surface of the lens, forming a continuous diffractive-refractive interface for redirecting light from the illumination source.

In some embodiments, the first and second set of prescription adjustment optics each comprise at least one of a lens, a diffuser, a micro lens array, or a mask, each configured to refine spatial filtering, beam shaping, or exposure characteristics of the light in the respective first and second optical paths prior to illumination of the holographic optical element.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a schematic illustration showing the propagation of light through a lens including an overlaid holographic element according to some embodiments.
FIG. 2 shows an exposure apparatus for manufacturing a prescription lens having a co-integrated holographic element according to certain embodiments.
FIG. 3 illustrates an example hologram display including prescription correction in accordance with various embodiments.
FIG. 4 is an illustration of an example artificial-reality system according to some embodiments of this disclosure.
FIG. 5 is an illustration of an example artificial-reality system with a handheld device according to some embodiments of this disclosure.
FIG. 6A is an illustration of example user interactions within an artificial-reality system according to some embodiments of this disclosure.
FIG. 6B is an illustration of example user interactions within an artificial-reality system according to some embodiments of this disclosure.
FIG. 7A is an illustration of example user interactions within an artificial-reality system according to some embodiments of this disclosure.
FIG. 7B is an illustration of example user interactions within an artificial-reality system according to some embodiments of this disclosure.
FIG. 8 is an illustration of an example wrist-wearable device of an artificial-reality system according to some embodiments of this disclosure.
FIG. 9 is an illustration of an example wearable artificial-reality system according to some embodiments of this disclosure.
FIG. 10 is an illustration of an example augmented-reality system according to some embodiments of this disclosure.
FIG. 11A is an illustration of an example virtual-reality system according to some embodiments of this disclosure.
FIG. 11B is an illustration of another perspective of the virtual-reality system shown in FIG. 11A.
FIG. 12 is a block diagram showing system components of example artificial- and virtual-reality systems.
FIG. 13 is an illustration of an example system that incorporates an eye-tracking subsystem capable of tracking a user's eye(s).
FIG. 14 is a more detailed illustration of various aspects of the eye-tracking subsystem illustrated in FIG. 13.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within this disclosure.

### DETAILED DESCRIPTION OF EXEMPLARY EMBODIMENTS

Virtual reality and augmented reality devices and headsets typically include an optical system having a microdisplay and imaging optics. Display light may be generated and projected to the eyes of a user using a display system where the light is in-coupled into a waveguide, transported therethrough by total internal reflection (TIR), replicated to form an expanded field of view, and out-coupled when reaching the position of a viewer's eye.

In accordance with particular embodiments, virtual reality and augmented reality devices may include a holographic display. Holographic display devices may be configured to generate three dimensional images that appear suspended in space. These devices generate images by reconstructing and projecting light waves in a manner that allows a user to perceive depth and motion in a way that mimics real world visual experiences.

Holographic devices typically include a lens with an overlying or embedded holographic layer and may be characterized by one or more attributes, including form factor, weight, rate of power consumption, and cost. Such devices may be incorporated into non-prescription as well as prescription modified optics. Notwithstanding recent developments, it would be advantageous to develop a holographic display and related methods of manufacture that allow for the co-integration of a holographic layer with prescription correction, particularly in non-planar lens architectures that are associated with prescription glasses.

Various embodiments of the present disclosure relate to systems, methods, and devices for producing observable virtual images using holographic optical elements having co-integrated prescription correction. Examples may include a transparent combining optic including a holographic optical element (HOE). The transparent combining optic may be configured to diffract light received at a first side of the transparent combining optic and form a vision corrected virtual image viewable from a non-pupil-forming eyebox, e.g., viewable from the first side of the transparent combining optic.

The corrected virtual image may include content defined by a distribution of an illumination source or an encoded holographic optical element. The holographic optical element may include at least one of a point-source hologram, an etendue expansion hologram, a set of multiplexed holograms, a layered stack of multiple holograms, or a patterned array of multiple holograms. The holographic optical element may also include a point of illumination. The illumination source may be positioned at the point of illumination. In some examples, a system may be configured such that light propagates through the point of illumination. In some examples, a system may be configured such that light propagates through a pre-aberrated region of illumination, where the aberrated wavefront does not converge or diverge from a point, but carries a non-spherical wavefront tailored to play back a hologram image.

By way of example, a point-source hologram may include a modified point-source hologram, where the exposure system includes additional lenses between the hologram and the point source, causing additional variation in the rays that define the hologram. Such a configuration may include a nearly-collimated reference beam to set a fixed virtual image distance plane that is closer than infinity.

The illumination source may include one or more extended sources, one or more point sources, and/or other types of light sources. The illumination source may include an array of illumination sources. The illumination source may be positioned on a head mounted device, such as a frame of the head mounted device. For instance, the illumination source may be secured to, or mounted within, the frame of a head-mounted device. The illumination source may be positioned outside of a field of view of a user wearing the head mounted device. In some embodiments, the illumination source may be within the range of a user's eye but obscured from view. For instance, the illumination source may emit light toward the lens where the light is blocked by the mechanical housing of the illumination source.

Light from the illumination source may propagate through free-space between the illumination source and the transparent combining optic or through the transparent combining optic before being diffracted by the holographic optical element. That is, the illumination source may be configured to provide free-space propagation and/or propagation through one or more of a waveguide, image guide, window, or prism. In an example, a head-mounted device may include both the illumination source and the transparent combining optic.

Various examples may also include a transparent combining optic configured to diffract an object beam on a first side of the transparent combining optic. The transparent combining optic may also be configured to diffract a reference beam received at a second side of the transparent combining optic. The transparent combining optic may be configured to combine the reference beam and the object beam to generate an eye box and an observable virtual image within the eye box. The observable virtual image may be viewable from the first side of the transparent combining optic. The object beam may be generated by the illumination source and the reference beam may be associated with a scene viewable through the transparent combining optic and/or another light source.

The transparent combining optic may include a lens and the holographic optical element may be disposed over a surface of the lens. The lens may be a prescription lens. In certain implementations, image light corresponding to a real world view may propagate through the lens, i.e., through both world side and user side surfaces of the lens, such that a corrected real world image is presented to the eyes of a user. Light corresponding to virtual content, on the other hand, may be diffracted by the holographic optical element and returned to the eyes of a user without propagating through both the world side and the user side surfaces of the lens.

In accordance with particular embodiments, selected prescription information may be written into the holographic optical element such that a fully corrected virtual image is presented to the eyes of a user notwithstanding the incomplete passage of virtual image light through the prescription lens. Thus, virtual image light traversing a first optical path and real world image light traversing a separate, second optical path may each be adjusted by the total optical power of the prescription lens.

In an example, the transparent combining optic may include a photosensitive holographic film laminated to a surface on a first side of a lens. The transparent combining optic may also include an optical element positioned on the second side of the transparent combining optic. The optical element may be configured to refine an optical property of the reference beam and may include at least one of a diffuser, a micro lens array, a mask, and the like. The optical property may include one or more of spatial filtering, beam shaping, and exposure. In another example, the transparent combining optic may generate a multiplexed hologram. The observable virtual image may be positioned to overlay a scene viewable through the transparent combining optic.

A method includes diffracting an object beam received at a first side of a transparent combining optic. The transparent combining optic may include a holographic optical element. The object beam may be generated by an illumination source. The method may further include diffracting a reference beam received at a second side of the transparent combining optic. The reference beam and the object beam may be combined to generate an eye box and an observable virtual image within the eye box. The observable virtual image may be viewable from the first side of the transparent combining optic.

The method may further include expanding the eye box by combining, via the transparent combining optic, a second object beam from a second illumination source. The method may include multiplexing, via the transparent combining optic, a second object beam from a second illumination source, and generating a second observable virtual image positioned to overlay a scene.

Various examples may include at least one illumination source emitting light, and a transparent combining optic including a holographic optical element. The light emitted from the illumination source may illuminate the transparent combining optic, including the holographic optical element, and the transparent combining optic may diffract the light to generate an observable virtual image. The observable virtual image may be positioned to overlay a real world scene viewable through the transparent combining optic. In some examples, the transparent combining optic, including the holographic optical element, may diffract the light to project the observable virtual image on a display. In particular embodiments, both the virtual image and the real world image may be vision corrected, e.g., based on a user's eye prescription.

In some examples, the illumination source may include a plurality of illumination sources, such as for example a variable illumination source or an array of illumination sources separated spatially and/or differing in spectrum. Illumination sources may separately emit light to illuminate the holographic optical element, and in some examples, a first illumination source and a second illumination source may project different images when diffracted by the holographic optical element.

The display may be included on a wearable system, such as a head-mounted display system. In some examples, a head-mounted display system may include at least one of a headset, glasses, helmet, visor, gaming device, or a smart device. The display may form part or all of one or more lenses, such as one or more lenses located on the frame of a pair of glasses. As such, the observable virtual image projected by the display may provide a virtual image that may be observed by a user wearing the glasses.

In some examples, a plurality of observable virtual images may be provided on the display. One or more images may be selectable, and include, for example, a time, a letter, a number, a shape, or an icon. At least one of the observable virtual images may be selectable. For example, when used with an eye tracking system, information indicative of a user focusing on or looking at the observable virtual image may cause one or more actions to be taken. Such actions may include, for example, taking an image of a scene captured by one or more cameras associated with the system, selecting an icon (e.g., opening up an application or feature associated with the icon, etc.), and/or the like.

In some additional examples of the present disclosure, the illumination may include a first illumination source and a second illumination source separately emitting light, a multiplexed holographic optical element, and a plurality of observable virtual images projected on the display. In other examples, the illumination source may be a variable illumination source, the holographic optical element may be multiplexed, and at least one of the plurality of observable virtual images may be selectable.

A display system includes a source configured to emit light, a lens having a curved surface, and a holographic film having a vision correction prescription of a user disposed over the curved surface of the lens to form a diffractive-refractive surface, where the light emitted from the source is redirected by the diffractive-refractive surface to form an image to be viewed by the user, the light incorporating the vision correction prescription.

In accordance with some embodiments, the lens curved surface is configured as a three-dimensional, non-planar optical interface designed to provide vision correction tailored to a user's prescription. This surface may be convex, concave, or a combination thereof, depending on the specific refractive requirements for correcting visual aberrations such as myopia, hyperopia, astigmatism, or presbyopia. The curvature may be engineered to achieve a predetermined optical power, which is a function of the surface's radius of curvature and the refractive index of the lens material.

In the context of the display system, the curved surface serves as the substrate onto which the holographic optical element is disposed. The curvature ensures that both real-world and virtual images passing through or diffracted by the lens are optically corrected according to the user's prescription. The non-planar geometry may be spherical, aspherical, toric, or progressive, and can be customized to match complex prescription profiles, including multifocal or spatially varying corrections.

In some embodiments, the curved surface may also facilitate the integration of the holographic optical element, allowing the diffractive-refractive surface formed by the combination of the lens and the holographic layer to redirect light from the illumination source and generate a virtual image that is optically corrected for the user.

Such a display system may be formed using a holographic exposure system. An example holographic exposure system includes a source emitting light, a beamsplitter configured to split the emitted light into a first optical path having first prescription adjustment optics, and a second optical path having second prescription adjustment optics, and a curved holographic film located within both the first optical path and the second optical path, where the light split by the beamsplitter propagates through independently configured first prescription adjustment optics and second prescription adjustment optics to illuminate the curved holographic film and record a hologram in the holographic film, the hologram including a vision correction prescription based on the configuration of the first prescription adjustment optics and the configuration of the second prescription adjustment optics.

Additional advantages will be set forth in part in the description which follows or may be learned by practice. The advantages may be realized and attained by means of the elements and combinations particularly pointed out in the appended claims. It is to be understood that both the foregoing general description and the following detailed description are exemplary and explanatory only and are not restrictive.

Features from any of the embodiments described herein may be used in combination with one another in accordance with the general principles described herein. These and other embodiments, features, and advantages will be more fully understood upon reading the following detailed description in conjunction with the accompanying drawings and claims.

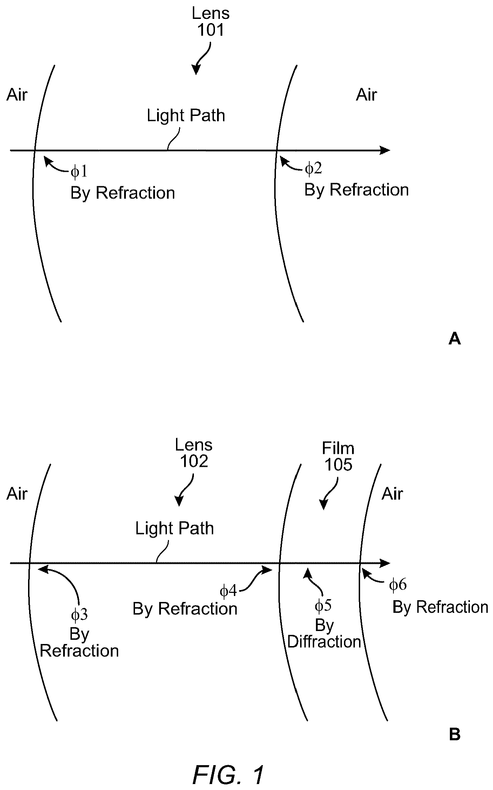

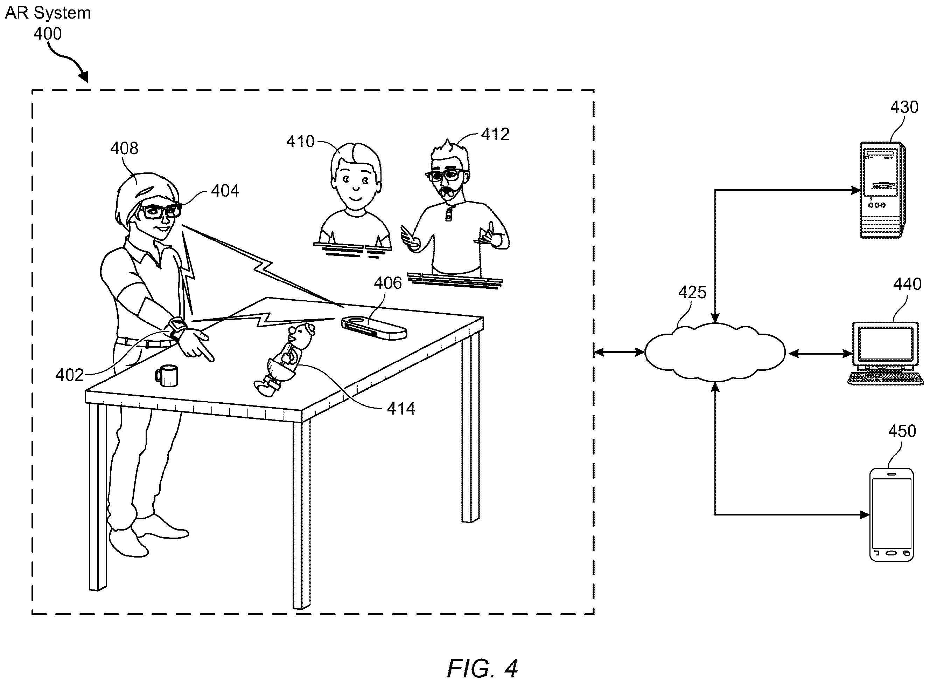

The following will provide, with reference to FIGS. 1-14, detailed descriptions of a holographic display system including co-integrated prescription correction. The discussion associated with FIGS. 1-3 includes a description of example holographic optical elements and their manufacture to include prescription correction. The discussion associated with FIGS. 4-14 relates to exemplary augmented reality and virtual reality devices that may include a prescription lens-containing holographic display.

Referring to FIG. 1, shown are cross-sectional views of a lens (e.g., a prescription or a non-prescription lens). The lens may include a glass or plastic body shaped to have two opposing curved surfaces of predetermined optical power (*ϕ*) through which light propagates. Light may be directed by either refraction, reflection, or diffraction. As shown in FIG. 1B, a holographic optical element 105 may include a volume Bragg grating (VBG) disposed over a surface of a lens. Light propagating through the holographic optical element may experience diffraction therein and/or refraction and/or reflection at surface interfaces with air or other materials of different refractive index. The interaction of light with an unmodified lens 101 is shown in FIG. 1A. The interaction of light with a lens 102 including an over-formed holographic optical element is shown in FIG. 1B.

Optical refractive power is a function of refractive index and a surface's radius of curvature. As depicted in FIG. 1B, with a thin film 105 of approximately equivalent refractive index laminated onto a surface of lens 102, the refractive power of the lens material-to-air surface interface will be transferred to the thin film-air surface interface. Referring still to FIG. 1, optical power *ϕ* may be affected by refraction, reflection, or diffraction. If the refractive indices of lenses 101 and 102 are equal and approximately equal to the refractive index of the thin film 105, then *ϕ*₁ ≈ *ϕ*₃*, ϕ*₂ ≈ *ϕ*₆, and *ϕ*₄ = 0.

Writing content into a volume Bragg grating (VBG) typically involves encoding information, typically in the form of a diffraction grating, into the volume of a suitable photosensitive material. Example photosensitive materials include doped glasses (e.g., silicate glasses doped with rare-earth ions), photopolymers, or photorefractive crystals. These materials may exhibit a change in refractive index when exposed to high intensity light.

The VBG writing process typically involves using a laser to generate coherent light, which is split into two or more beams. A common configuration may include a two beam interference setup that includes (i) a reference beam that is directed through the photosensitive material and (ii) a signal or writing beam that is split from the reference beam and directed to interfere with the reference beam within the material volume.

An interference pattern may be created to encode the grating structure. When the reference beam and the signal beam overlap within the photosensitive material, they may interfere with each other to create a periodic intensity pattern of constructive and destructive interference. The interference pattern may depend on the angle between the beams and the wavelength of light determining the periodicity or spacing of the grating.

The interference pattern induces a spatial modulation in the refractive index of the photosensitive material. This change in refractive index is typically caused by photo induced chemical reactions (in the case of photopolymers) or by the photorefractive effect (in the case of photorefractive crystals). The resulting grating pattern may have a period ranging from a few micrometers to a few millimeters, depending on the wavelength of the laser and the geometry of the setup.

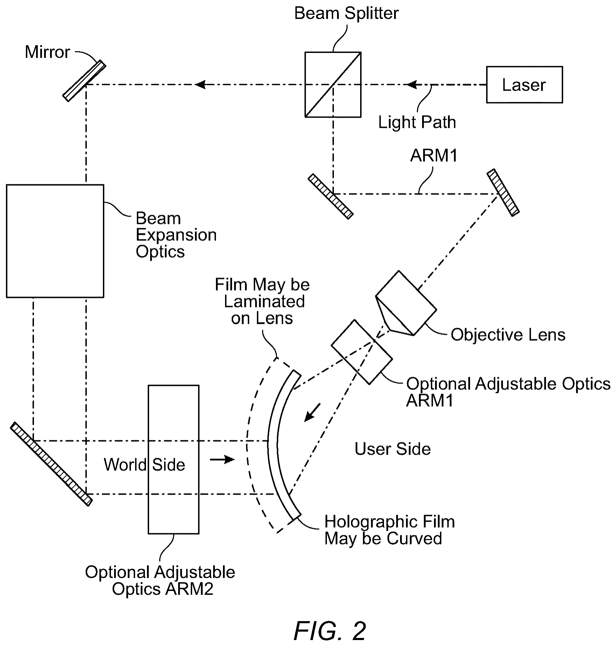

Referring to FIG. 2, a VBG holographic exposure setup includes first and second optical paths arranged proximate to a lens having a holographic material disposed over a surface of the lens. The first optical path is configured to simulate a virtual image incident on the user side of the lens and the second optical path is configured to simulate a playback illumination source incident on the world side of the lens.

In accordance with various embodiments, the VBG holographic exposure setup is configured to write holographic content into the holographic material and incorporate vision correction in the virtual image written into the hologram or holographic optical power written into the hologram. Prescription adjustment may be accomplished by controlling the optics within either optical path of the exposure setup. Optical power for prescription correction for the virtual image may derive from a combination of refractive, reflective, and diffractive power.

Content, including prescription information, may be written into the holographic film before or after laminating the holographic film to a surface of the lens. That is, in some embodiments, a hologram may be fabricated prior to lamination to include compensation for diffraction and refraction occurring in final playback as well as prescription lens correction. Referring still to FIG. 2, optical power may be included in the adjustable optics of the second optical path, for example. Whether formed separately or *in situ,* the hologram may be laminated on the front or back surface of the lens. The hologram may be a transmission hologram or a reflection hologram.

A method for writing target content may include making suitable adjustments to the first optical path optics and/or the second optical path optics. Adjustments of the first and second optical path optics may include one or more of a choice of lenses, lens positions, and other optical power adjustments.

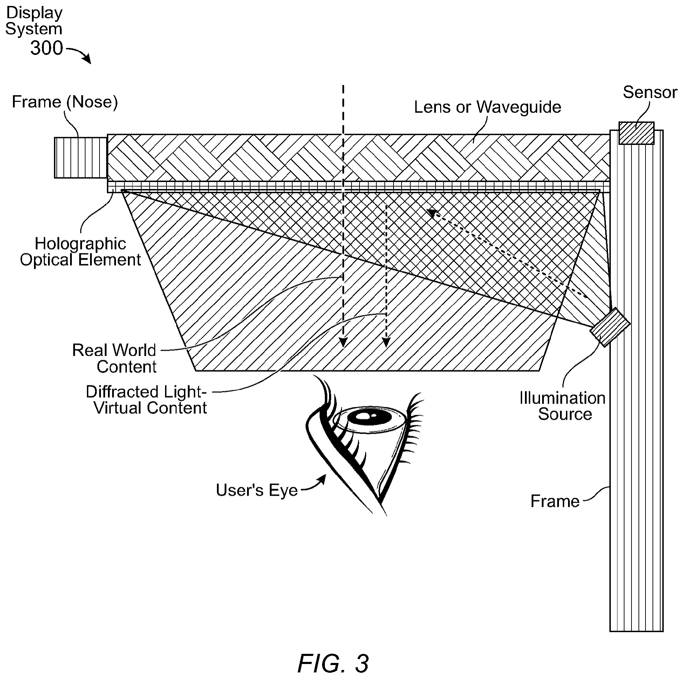

FIG. 3 illustrates an example implementation of a holographic optical element-based display system in accordance with various embodiments. The display system 300 includes a frame supporting an illumination source, a sensor (e.g., camera), and one or more lenses or waveguides having an over formed holographic optical element. The holographic element may include a holographic film, such as a volume Bragg grating (VBG). A protective film (not shown) may cover the holographic optical film, or other optical films may be incorporated into the lens stack.

The illumination source may include a laser or a light emitting diode, for example, and may be configured to illuminate the holographic optical element from the user side of the display system. The holographic optical element diffracts and redirects light from the illumination source toward the eyes of a user to deliver a static virtual image defined by image content recorded within the holographic optical element. In further embodiments, the illumination source may include a display that is configured to project variable image content onto the holographic element, which is scattered in the direction of a user's eyes to provide a static virtual image to the user. The static virtual image may subtend a significantly larger angle than any dynamic display incorporated into lenses, such as a waveguide display.

It will be appreciated that the static projection is not limited by the field of view of a waveguide or lens system proximate the illumination source. Instead, the field of view of static content may be encoded in the hologram and the field of view reaching a user's eyes may be limited only by the extent of the holographic material in the frames. Moreover, the holographic optical element may include multiple holographic optical elements and the illumination source may include an illumination system having multiple illumination sources or a variable illumination source. Each different illumination source, or variable source mode, may project a different static image (e.g., multiplexing across sources and holographic optical elements). Various types of holographic optical elements, including but not limited to multiplexed holographic optical elements, may be compatible with the display system, which may be configured as glasses, smart glasses, glasses with AR displays, and various combinations discussed herein, whether the AR display is waveguide-based or uses another AR combining architecture.

According to some aspects, the holographic optical element may be transparent and disposed over a surface of a lens. The holographic optical element may include multiple layers or many exposures, and each layer or exposure may be multiplexed to a unique illumination trait. Different or changing sources may be configured to "turn on" each projection. For example, a first color source (e.g., a green source) illuminating the holographic optical element may "turn on" a rectangular box line viewfinder showing a photo field of view (FOV) (e.g., 60×80 degrees). A second color source (e.g., a red source) may "turn on" a different size rectangular box showing a video FOV (e.g., 40×40 degrees). Accordingly, respective observable images may be generated from separate illumination sources.

In various examples, holographic optical element multiplexing may be carried out in any wavelength, polarization, angle, or any other optical multiplexing technique. Many types of holographic optical elements may be utilized, including volume Bragg grating (VBG), polarization volume hologram (PVH), surface relief grating (SRG), meta surface, etc. Light emitting diode (LED) illumination, for example, may be used by a broadband holographic optical element, or by multiple exposures at different wavelengths within an LED to increase an effective bandwidth to match the LED.

As illustrated in FIG. 3, a user's eye may be positioned behind a respective lens system, e.g., a right lens system and a left lens system (not separately shown). The lens system may be configured to provide a visual display. In some instantiations, a sensor may be adapted to capture a field of that includes a corresponding eye and track movements of that eye. One or more sensors may have a field of view that includes one or both eyes. Eye tracking information for one or both eyes, captured by a single sensor or by eye-specific sensors, may be used. Variations and combinations or sensor information and eye information may be adjusted based on a type of sensor desired information, and other application characteristics and factors, including but not limited to latency, power consumption, accuracy, and the like.

In various examples, a sensor may be positioned outside of a field of view of an eye, particularly the eye being tracked by the sensor. Such positioning prevents obstruction, distraction, and other discomfort or annoyance that may arise with the sensor located within an eye's field of view. Such positioning further enables seamless operation, and in some cases, presentation of visual content on a lens system. For example, a device may activate or deactivate some or all of the display based on an eye gaze direction.

As will be appreciated, using a first tracking method, a right eye sensor may track the right eye of the user and, using a second tracking method different from the first tracking method, a left eye sensor may track the left eye of the user. In various examples, the tracking may be visual tracking, for example, using a camera or photosensor oculography (PSOG), which may occur in real-time, as well as range imaging and time of flight techniques, including indirect time of flight (iTOF) techniques, among others.

In some instantiations, the display system (i.e., display system 300) may be utilized in a Metaverse network. In other examples, the display system may be utilized in any suitable network capable of provisioning content and/or facilitating communications among entities within or associated with the network. In some examples, the display system may include an AR/VR glasses headset. It should be appreciated that various sensors and techniques may be applied to a range of applications, including but not limited to other head-mounted devices, headsets, helmets, visors, gaming devices, smart devices, and other wearable technology, including glasses that do not include digital pixelated displays.

Disclosed is a display system for prescription lenses that integrates a holographic optical element with vision correction functionality. The system includes a lens with a curved surface, over which a holographic optical element is disposed. This holographic element is encoded with a user's specific vision correction prescription, enabling the lens to correct refractive errors such as myopia, hyperopia, astigmatism, or presbyopia.

An illumination source emits light that is redirected by a diffractive-refractive surface formed by the combination of the lens and the holographic optical element, generating a virtual image that is optically corrected for the user. The holographic optical element may be fabricated using a holographic exposure system that writes prescription data into the element either before or after lamination onto the lens.

The system may support features such as spatially varying prescription profiles for multifocal or progressive correction, multiplexed holograms, and compatibility with non-planar lens geometries. In some embodiments, the display system enables the overlay of virtual content onto real-world scenes, making it suitable for augmented reality and mixed reality applications, while ensuring that both virtual and real images are corrected according to the user's prescription. This approach streamlines the integration of vision correction and display technology, providing users with comfortable, prescription-accurate eyewear capable of presenting high-quality virtual images.

### Example Embodiments

Example 1: A display system includes an illumination source configured to emit light, a lens comprising a curved surface, and a holographic optical element incorporated into the lens, where the holographic optical element forms a diffractive-refractive surface and includes a vision correction prescription of a user, and the light emitted from the illumination source is redirected by the diffractive-refractive surface to form a virtual image to be viewed by the user, the light incorporating the vision correction prescription.

Example 2: The display system of Example 1, where the illumination source includes an array of illumination sources.

Example 3: The display system of Example 1 or Example 2, where the illumination source is located outside of a field of view of the user wearing the display system.

Example 4: The display system of any of Examples 1-3, where the holographic optical element includes at least one of a point-source hologram, an etendue expansion hologram, a set of multiplexed holograms, a layered stack of multiple holograms, or a patterned array of multiple holograms.

Example 5: The display system of any of Examples 1-4, where the holographic optical element is disposed over an outer surface of the lens.

Example 6: The display system of any of Examples 1-5, where the holographic optical element includes a photosensitive holographic layer.

Example 7: The display system of any of Examples 1-6, where the holographic optical element is encoded with prescription data specific to the user and is fabricated based on an ophthalmic measurement of a refractive error of the user.

Example 8: The display system of any of Examples 1-7, where the holographic optical element is written with a spatially varying prescription profile to provide multifocal or progressive vision correction.

Example 9: The display system of any of Examples 1-8, where the vision correction prescription incorporated in the holographic optical element is configured to compensate for at least one of myopia, hyperopia, astigmatism, or presbyopia of the user.

Example 10: The display system of any of Examples 1-6, where the vision correction prescription is integrated into the holographic optical element after lamination onto the lens, such that the virtual image presented to the user is optically corrected according to the user's prescription.

Example 11: The display system of any of Examples 1-10, where the virtual image includes at least one of content defined by a distribution of the illumination source, or content defined by an encoding of the holographic optical element.

Example 12: A holographic exposure system includes an illumination source emitting light, a beamsplitter configured to split the emitted light into a first optical path including first prescription adjustment optics, and a second optical path including second prescription adjustment optics, and a curved holographic optical element located within both the first optical path and the second optical path, where the light split by the beamsplitter propagates through independently configured first prescription adjustment optics and second prescription adjustment optics to illuminate the curved holographic optical element and record a hologram in the holographic optical element, the hologram including a vision correction prescription based on the configuration of the first prescription adjustment optics and the configuration of the second prescription adjustment optics.

Example 13: The holographic exposure system of Example 12, where the first prescription adjustment optics and the second prescription adjustment optics include equivalent prescription adjustment optics.

Example 14: The holographic exposure system of Example 12 or Example 13, where the curved holographic optical element includes a photosensitive holographic film.

Example 15: The holographic exposure system of any of Examples 12-14, where the curved holographic optical element is incorporated into a lens.

Example 16: A display system includes a lens having a curved surface, a holographic optical element incorporated into the lens, an illumination source configured to emit light toward the lens, a beamsplitter positioned to receive light from the illumination source and divide the light into a first optical path and a second optical path, a first set of prescription adjustment optics positioned along the first optical path, and a second set of prescription adjustment optics positioned along the second optical path, where the holographic optical element is configured to record a hologram based on light received from both the first and second optical paths, the hologram incorporating vision correction prescription data specific to a user.

Example 17: The display system of Example 16, where the lens includes a non-planar geometry selected to match prescription requirements of the user, and the holographic optical element conforms to the curved surface of the lens.

Example 18: The display system of Example 16 or Example 17, where the beamsplitter is positioned between the illumination source and the lens, and the beamsplitter is configured to divide the emitted light into two spatially separated optical paths directed toward distinct regions of the holographic optical element.

Example 19: The display system of any of Examples 16-18, where the holographic optical element is laminated directly onto the curved surface of the lens, forming a continuous diffractive-refractive interface for redirecting light from the illumination source.

Example 20: The display system of any of Examples 16-19, where the first and second set of prescription adjustment optics each include at least one of a lens, a diffuser, a micro lens array, or a mask, each configured to refine spatial filtering, beam shaping, or exposure characteristics of the light in the respective first and second optical paths prior to illumination of the holographic optical element.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, in some embodiments, AR may also be associated with applications, products, accessories, services, or some combination thereof, that are used to, for example, create content in an artificial reality and/or are otherwise used in (e.g., to perform activities in) an artificial reality.

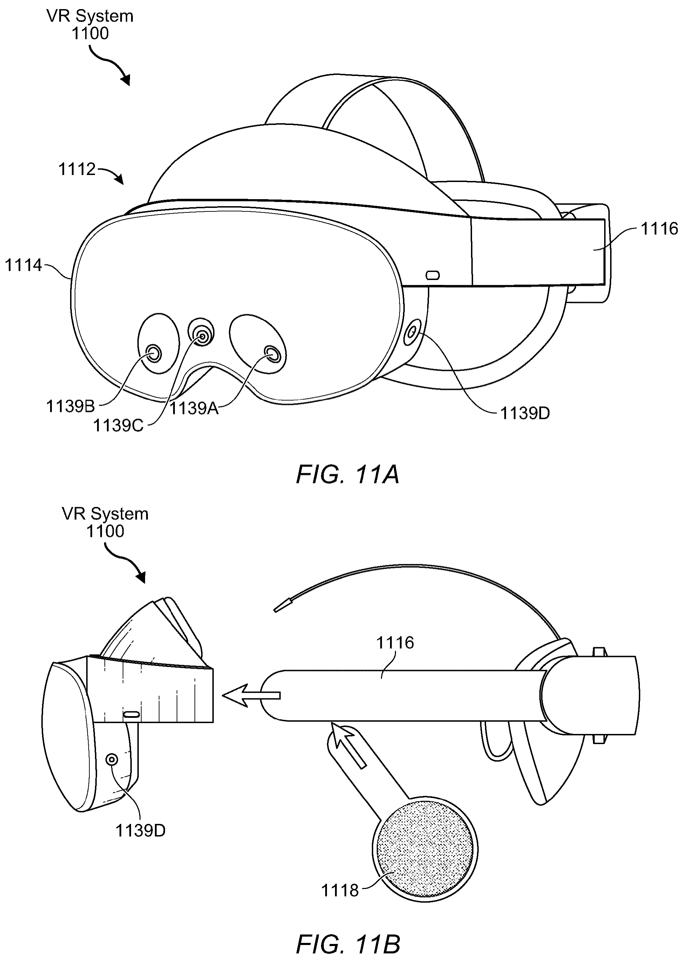

AR systems may be implemented in a variety of different form factors and configurations. Some AR systems may be designed to work without near-eye displays (NEDs). Other AR systems may include a NED that also provides visibility into the real world (such as, e.g., VR system 1100 in FIGS. 11A and 11B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

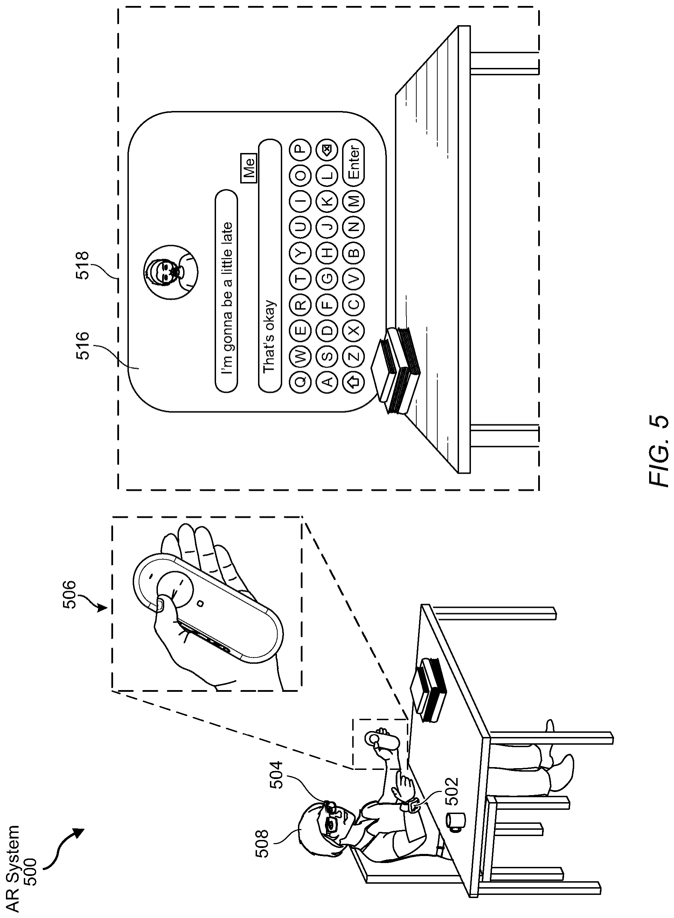

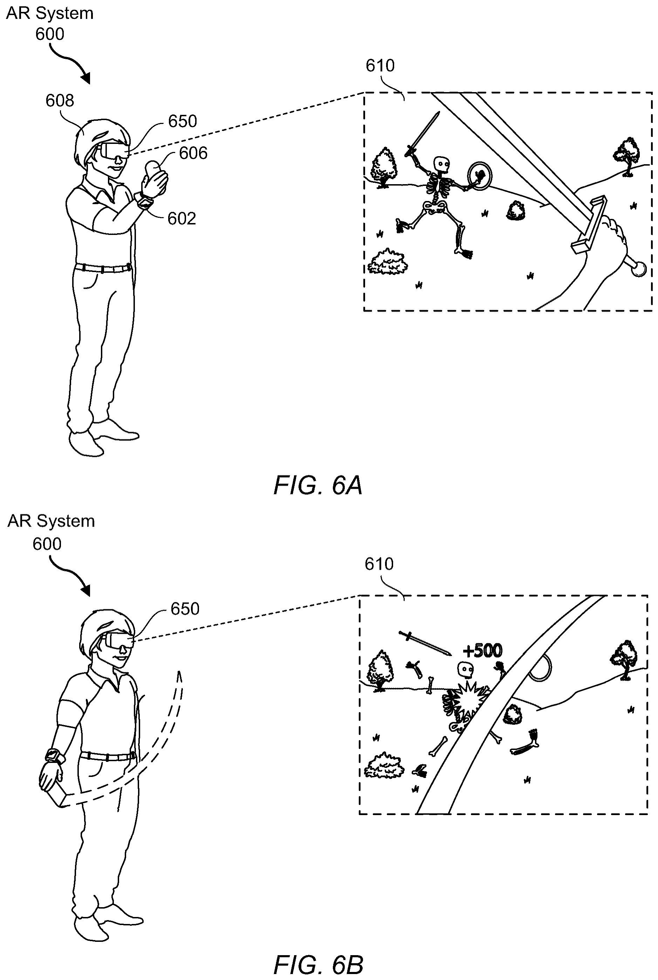

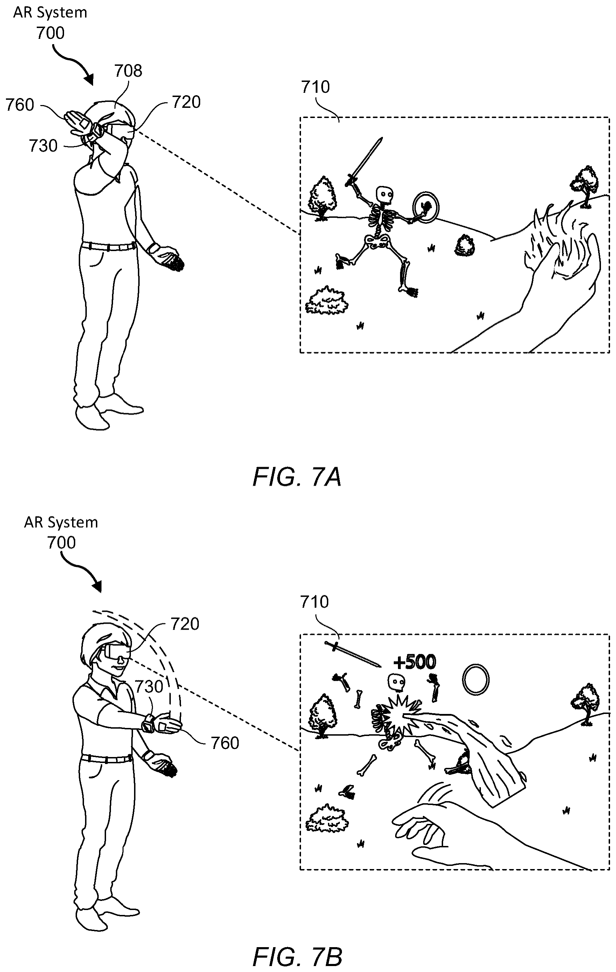

FIGS. 4-7B illustrate example artificial-reality (AR) systems in accordance with some embodiments. FIG. 4 shows a first AR system 400 and first example user interactions using a wrist-wearable device 402, a head-wearable device (e.g., AR system 1000), and/or a handheld intermediary processing device (HIPD) 406. FIG. 5 shows a second AR system 500 and second example user interactions using a wrist-wearable device 502, AR glasses 504, and/or an HIPD 506. FIGS. 6A and 6B show a third AR system 600 and third example user 608 interactions using a wrist-wearable device 602, a head-wearable device (e.g., VR headset 650), and/or an HIPD 606. FIGS. 7A and 7B show a fourth AR system 700 and fourth example user 708 interactions using a wrist-wearable device 730, VR headset 720, and/or a haptic device 760 (e.g., wearable gloves).

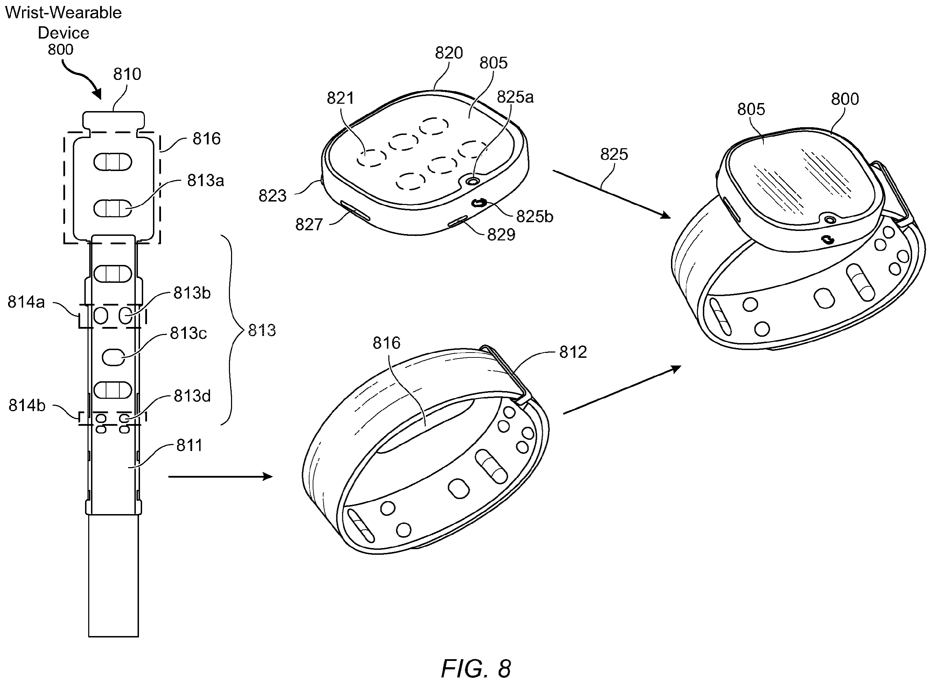

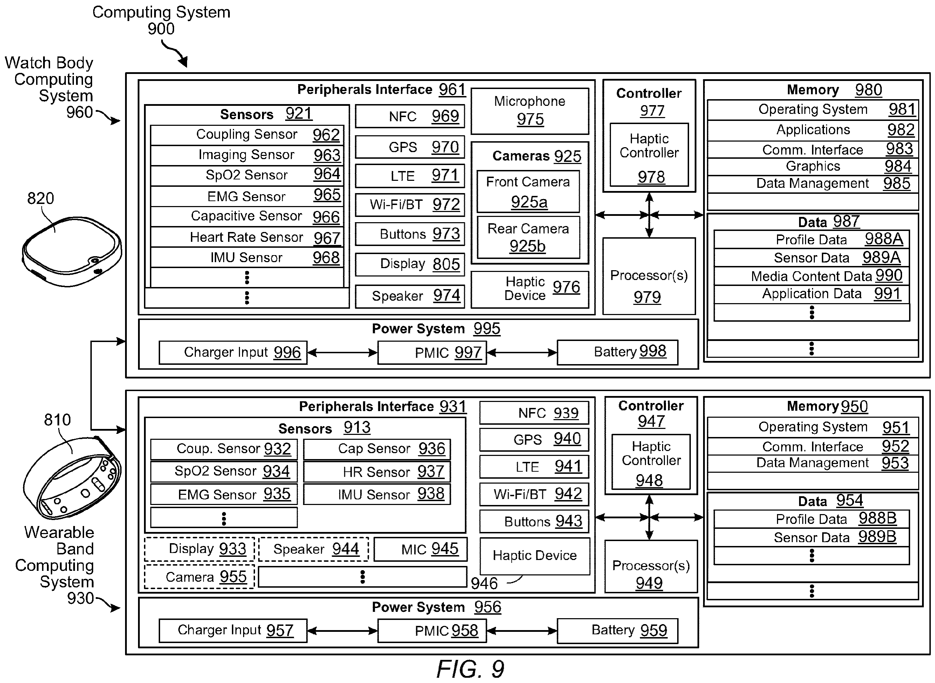

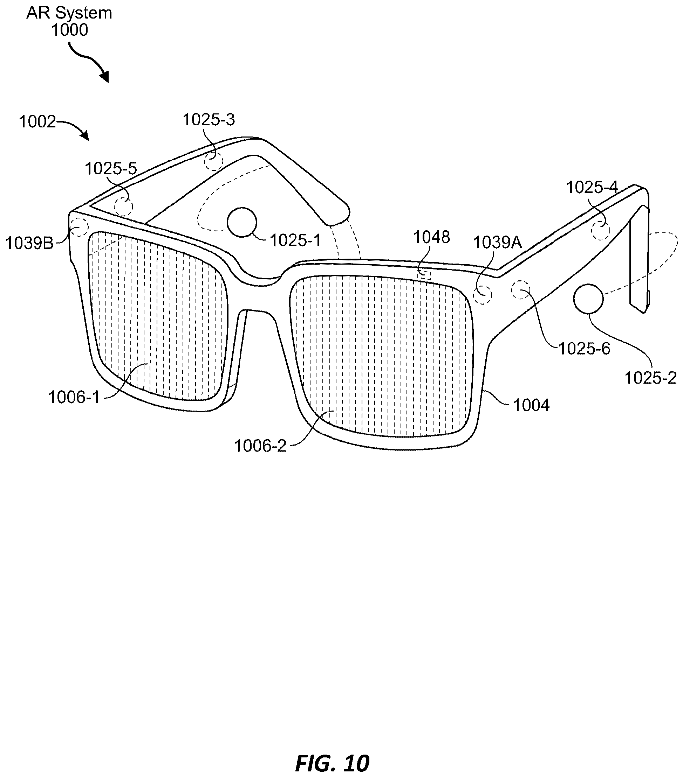

A wrist-wearable device 800, which can be used for wrist-wearable device 402, 502, 602, 730, and one or more of its components, are described below in reference to FIGS. 8 and 9; AR system 1000 and VR system 1100, which can respectively be used for AR glasses 404, 504 or VR headset 650, 720, and their one or more components are described below in reference to FIGS. 10-12.

Referring to FIG. 4, wrist-wearable device 402, AR glasses 404, and/or HIPD 406 can communicatively couple via a network 425 (e.g., cellular, near field, Wi-Fi, personal area network, wireless LAN, etc.). Additionally, wrist-wearable device 402, AR glasses 404, and/or HIPD 406 can also communicatively couple with one or more servers 430, computers 440 (e.g., laptops, computers, etc.), mobile devices 450 (e.g., smartphones, tablets, etc.), and/or other electronic devices via network 425 (e.g., cellular, near field, Wi-Fi, personal area network, wireless LAN, etc.).

In FIG. 4, a user 408 is shown wearing wrist-wearable device 402 and AR glasses 404 and having HIPD 406 on their desk. The wrist-wearable device 402, AR glasses 404, and HIPD 406 facilitate user interaction with an AR environment. In particular, as shown by first AR system 400, wrist-wearable device 402, AR glasses 404, and/or HIPD 406 cause presentation of one or more avatars 410, digital representations of contacts 412, and virtual objects 414. As discussed below, user 408 can interact with one or more avatars 410, digital representations of contacts 412, and virtual objects 414 via wrist-wearable device 402, AR glasses 404, and/or HIPD 406.

User 408 can use any of wrist-wearable device 402, AR glasses 404, and/or HIPD 406 to provide user inputs. For example, user 408 can perform one or more hand gestures that are detected by wrist-wearable device 402 (e.g., using one or more EMG sensors and/or IMUs, described below in reference to FIGS. 8 and 9) and/or AR glasses 404 (e.g., using one or more image sensor or camera, described below in reference to FIGS. 10-10) to provide a user input. Alternatively, or additionally, user 408 can provide a user input via one or more touch surfaces of wrist-wearable device 402, AR glasses 404, HIPD 406, and/or voice commands captured by a microphone of wrist-wearable device 402, AR glasses 404, and/or HIPD 406. In some embodiments, wrist-wearable device 402, AR glasses 404, and/or HIPD 406 include a digital assistant to help user 408 in providing a user input (e.g., completing a sequence of operations, suggesting different operations or commands, providing reminders, confirming a command, etc.). In some embodiments, user 408 can provide a user input via one or more facial gestures and/or facial expressions. For example, cameras of wrist-wearable device 402, AR glasses 404, and/or HIPD 406 can track eyes of user 408 for navigating a user interface.

Wrist-wearable device 402, AR glasses 404, and/or HIPD 406 can operate alone or in conjunction to allow user 408 to interact with the AR environment. In some embodiments, HIPD 406 is configured to operate as a central hub or control center for the wrist-wearable device 402, AR glasses 404, and/or another communicatively coupled device. For example, user 408 can provide an input to interact with the AR environment at any of wrist-wearable device 402, AR glasses 404, and/or HIPD 406, and HIPD 406 can identify one or more back-end and front-end tasks to cause the performance of the requested interaction and distribute instructions to cause the performance of the one or more back-end and front-end tasks at wrist-wearable device 402, AR glasses 404, and/or HIPD 406. In some embodiments, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). As described below, HIPD 406 can perform the back-end tasks and provide wrist-wearable device 402 and/or AR glasses 404 operational data corresponding to the performed back-end tasks such that wrist-wearable device 402 and/or AR glasses 404 can perform the front-end tasks. In this way, HIPD 406, which has more computational resources and greater thermal headroom than wrist-wearable device 402 and/or AR glasses 404, performs computationally intensive tasks and reduces the computer resource utilization and/or power usage of wrist-wearable device 402 and/or AR glasses 404.

In the example shown by first AR system 400, HIPD 406 identifies one or more back-end tasks and front-end tasks associated with a user request to initiate an AR video call with one or more other users (represented by avatar 410 and the digital representation of contact 412) and distributes instructions to cause the performance of the one or more back-end tasks and front-end tasks. In particular, HIPD 406 performs back-end tasks for processing and/or rendering image data (and other data) associated with the AR video call and provides operational data associated with the performed back-end tasks to AR glasses 404 such that the AR glasses 404 perform front-end tasks for presenting the AR video call (e.g., presenting avatar 410 and digital representation of contact 412).

In some embodiments, HIPD 406 can operate as a focal or anchor point for causing the presentation of information. This allows user 408 to be generally aware of where information is presented. For example, as shown in first AR system 400, avatar 410 and the digital representation of contact 412 are presented above HIPD 406. In particular, HIPD 406 and AR glasses 404 operate in conjunction to determine a location for presenting avatar 410 and the digital representation of contact 412. In some embodiments, information can be presented a predetermined distance from HIPD 406 (e.g., within 5 meters). For example, as shown in first AR system 400, virtual object 414 is presented on the desk some distance from HIPD 406. Similar to the above example, HIPD 406 and AR glasses 404 can operate in conjunction to determine a location for presenting virtual object 414. Alternatively, in some embodiments, presentation of information is not bound by HIPD 406. More specifically, avatar 410, digital representation of contact 412, and virtual object 414 do not have to be presented within a predetermined distance of HIPD 406.

User inputs provided at wrist-wearable device 402, AR glasses 404, and/or HIPD 406 are coordinated such that the user can use any device to initiate, continue, and/or complete an operation. For example, user 408 can provide a user input to AR glasses 404 to cause AR glasses 404 to present virtual object 414 and, while virtual object 414 is presented by AR glasses 404, user 408 can provide one or more hand gestures via wrist-wearable device 402 to interact and/or manipulate virtual object 414.

FIG. 5 shows a user 508 wearing a wrist-wearable device 502 and AR glasses 504, and holding an HIPD 506. In second AR system 500, the wrist-wearable device 502, AR glasses 504, and/or HIPD 506 are used to receive and/or provide one or more messages to a contact of user 508. In particular, wrist-wearable device 502, AR glasses 504, and/or HIPD 506 detect and coordinate one or more user inputs to initiate a messaging application and prepare a response to a received message via the messaging application.

In some embodiments, user 508 initiates, via a user input, an application on wrist-wearable device 502, AR glasses 504, and/or HIPD 506 that causes the application to initiate on at least one device. For example, in second AR system 500, user 508 performs a hand gesture associated with a command for initiating a messaging application (represented by messaging user interface 516), wrist-wearable device 502 detects the hand gesture and, based on a determination that user 508 is wearing AR glasses 504, causes AR glasses 504 to present a messaging user interface 516 of the messaging application. AR glasses 504 can present messaging user interface 516 to user 508 via its display (e.g., as shown by a field of view 518 of user 508). In some embodiments, the application is initiated and executed on the device (e.g., wrist-wearable device 502, AR glasses 504, and/or HIPD 506) that detects the user input to initiate the application, and the device provides another device operational data to cause the presentation of the messaging application. For example, wrist-wearable device 502 can detect the user input to initiate a messaging application, initiate and run the messaging application, and provide operational data to AR glasses 504 and/or HIPD 506 to cause presentation of the messaging application. Alternatively, the application can be initiated and executed at a device other than the device that detected the user input. For example, wrist-wearable device 502 can detect the hand gesture associated with initiating the messaging application and cause HIPD 506 to run the messaging application and coordinate the presentation of the messaging application.

Further, user 508 can provide a user input provided at wrist-wearable device 502, AR glasses 504, and/or HIPD 506 to continue and/or complete an operation initiated at another device. For example, after initiating the messaging application via wrist-wearable device 502 and while AR glasses 504 present messaging user interface 516, user 508 can provide an input at HIPD 506 to prepare a response (e.g., shown by the swipe gesture performed on HIPD 506). Gestures performed by user 508 on HIPD 506 can be provided and/or displayed on another device. For example, a swipe gestured performed on HIPD 506 is displayed on a virtual keyboard of messaging user interface 516 displayed by AR glasses 504.

In some embodiments, wrist-wearable device 502, AR glasses 504, HIPD 506, and/or any other communicatively coupled device can present one or more notifications to user 508. The notification can be an indication of a new message, an incoming call, an application update, a status update, etc. User 508 can select the notification via wrist-wearable device 502, AR glasses 504, and/or HIPD 506 and can cause presentation of an application or operation associated with the notification on at least one device. For example, user 508 can receive a notification that a message was received at wrist-wearable device 502, AR glasses 504, HIPD 506, and/or any other communicatively coupled device and can then provide a user input at wrist-wearable device 502, AR glasses 504, and/or HIPD 506 to review the notification, and the device detecting the user input can cause an application associated with the notification to be initiated and/or presented at wrist-wearable device 502, AR glasses 504, and/or HIPD 506.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 504 can present to user 508 game application data, and HIPD 506 can be used as a controller to provide inputs to the game. Similarly, user 508 can use wrist-wearable device 502 to initiate a camera of AR glasses 504, and user 308 can use wrist-wearable device 502, AR glasses 504, and/or HIPD 506 to manipulate the image capture (e.g., zoom in or out, apply filters, etc.) and capture image data.

Users may interact with the devices disclosed herein in a variety of ways. For example, as shown in FIGS. 6A and 6B, a user 608 may interact with an AR system 600 by donning a VR headset 650 while holding HIPD 606 and wearing wrist-wearable device 602. In this example, AR system 600 may enable a user to interact with a game 610 by swiping their arm. One or more of VR headset 650, HIPD 606, and wrist-wearable device 602 may detect this gesture and, in response, may display a sword strike in game 610. Similarly, in FIGS. 7A and 7B, a user 708 may interact with an AR system 700 by donning a VR headset 720 while wearing haptic device 760 and wrist-wearable device 730. In this example, AR system 700 may enable a user to interact with a game 710 by swiping their arm. One or more of VR headset 720, haptic device 760, and wrist-wearable device 730 may detect this gesture and, in response, may display a spell being cast in game 610.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some embodiments discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. In some embodiments, examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by embodiments described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various embodiments described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configured to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars. (vii) clocks, and (viii) communication interface modules for enabling wired and/or wireless connections between different respective electronic devices (e.g., IEEE 1002.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some embodiments, a communication interface can refer to a software layer that enables different software programs to communicate with each other (e.g., application programming interfaces (APIs), protocols like HTTP and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 8 and 9 illustrate an example wrist-wearable device 800 and an example computer system 900, in accordance with some embodiments. Wrist-wearable device 800 is an instance of wearable device 402 described in FIG. 4 herein, such that the wearable device 402 should be understood to have the features of the wrist-wearable device 800 and vice versa. FIG. 9 illustrates components of the wrist-wearable device 800, which can be used individually or in combination, including combinations that include other electronic devices and/or electronic components.

FIG. 8 shows a wearable band 810 and a watch body 820 (or capsule) being coupled, as discussed below, to form wrist-wearable device 800. Wrist-wearable device 800 can perform various functions and/or operations associated with navigating through user interfaces and selectively opening applications as well as the functions and/or operations described above with reference to FIGS. 4-7B.

As will be described in more detail below, operations executed by wrist-wearable device 800 can include (i) presenting content to a user (e.g., displaying visual content via a display 805), (ii) detecting (e.g., sensing) user input (e.g., sensing a touch on peripheral button 823 and/or at a touch screen of the display 805, a hand gesture detected by sensors (e.g., biopotential sensors)), (iii) sensing biometric data (e.g., neuromuscular signals, heart rate, temperature, sleep, etc.) via one or more sensors 813, messaging (e.g., text, speech, video, etc.); image capture via one or more imaging devices or cameras 825, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 820, independently in wearable band 810, and/or via an electronic communication between watch body 820 and wearable band 810. In some embodiments, functions can be executed on wrist-wearable device 800 while an AR environment is being presented (e.g., via one of AR systems 400 to 700). The wearable devices described herein can also be used with other types of AR environments.

Wearable band 810 can be configured to be worn by a user such that an inner surface of a wearable structure 811 of wearable band 810 is in contact with the user's skin. In this example, when worn by a user, sensors 813 may contact the user's skin. In some examples, one or more of sensors 813 can sense biometric data such as a user's heart rate, a saturated oxygen level, temperature, sweat level, neuromuscular signals, or a combination thereof. One or more of sensors 813 can also sense data about a user's environment including a user's motion, altitude, location, orientation, gait, acceleration, position, or a combination thereof. In some embodiment, one or more of sensors 813 can be configured to track a position and/or motion of wearable band 810. One or more of sensors 813 can include any of the sensors defined above and/or discussed below with respect to FIG. 8.

One or more of sensors 813 can be distributed on an inside and/or an outside surface of wearable band 810. In some embodiments, one or more of sensors 813 are uniformly spaced along wearable band 810. Alternatively, in some embodiments, one or more of sensors 813 are positioned at distinct points along wearable band 810. As shown in FIG. 8, one or more of sensors 813 can be the same or distinct. For example, in some embodiments, one or more of sensors 813 can be shaped as a pill (e.g., sensor 813a), an oval, a circle a square, an oblong (e.g., sensor 813c) and/or any other shape that maintains contact with the user's skin (e.g., such that neuromuscular signal and/or other biometric data can be accurately measured at the user's skin). In some embodiments, one or more sensors of 813 are aligned to form pairs of sensors (e.g., for sensing neuromuscular signals based on differential sensing within each respective sensor). For example, sensor 813b may be aligned with an adjacent sensor to form sensor pair 814a and sensor 813d may be aligned with an adjacent sensor to form sensor pair 814b. In some embodiments, wearable band 810 does not have a sensor pair. Alternatively, in some embodiments, wearable band 810 has a predetermined number of sensor pairs (one pair of sensors, three pairs of sensors, four pairs of sensors, six pairs of sensors, sixteen pairs of sensors, etc.).

Wearable band 810 can include any suitable number of sensors 813. In some embodiments, the number and arrangement of sensors 813 depends on the particular application for which wearable band 810 is used. For instance, wearable band 810 can be configured as an armband, wristband, or chest-band that include a plurality of sensors 813 with different number of sensors 813, a variety of types of individual sensors with the plurality of sensors 813, and different arrangements for each use case, such as medical use cases as compared to gaming or general day-to-day use cases.

In accordance with some embodiments, wearable band 810 further includes an electrical ground electrode and a shielding electrode. The electrical ground and shielding electrodes, like the sensors 813, can be distributed on the inside surface of the wearable band 810 such that they contact a portion of the user's skin. For example, the electrical ground and shielding electrodes can be at an inside surface of a coupling mechanism 816 or an inside surface of a wearable structure 811. The electrical ground and shielding electrodes can be formed and/or use the same components as sensors 813. In some embodiments, wearable band 810 includes more than one electrical ground electrode and more than one shielding electrode.

Sensors 813 can be formed as part of wearable structure 811 of wearable band 810. In some embodiments, sensors 813 are flush or substantially flush with wearable structure 811 such that they do not extend beyond the surface of wearable structure 811. While flush with wearable structure 811, sensors 813 are still configured to contact the user's skin (e.g., via a skin-contacting surface). Alternatively, in some embodiments, sensors 813 extend beyond wearable structure 811 a predetermined distance (e.g., 0.1 - 2 mm) to make contact and depress into the user's skin. In some embodiments, sensors 813 are coupled to an actuator (not shown) configured to adjust an extension height (e.g., a distance from the surface of wearable structure 811) of sensors 813 such that sensors 813 make contact and depress into the user's skin. In some embodiments, the actuators adjust the extension height between 0.01 mm - 1.2 mm. This may allow a user to customize the positioning of sensors 813 to improve the overall comfort of the wearable band 810 when worn while still allowing sensors 813 to contact the user's skin. In some embodiments, sensors 813 are indistinguishable from wearable structure 811 when worn by the user.

Wearable structure 811 can be formed of an elastic material, elastomers, etc., configured to be stretched and fitted to be worn by the user. In some embodiments, wearable structure 811 is a textile or woven fabric. As described above, sensors 813 can be formed as part of a wearable structure 811. For example, sensors 813 can be molded into the wearable structure 811, be integrated into a woven fabric (e.g., sensors 813 can be sewn into the fabric and mimic the pliability of fabric and can and/or be constructed from a series woven strands of fabric).

Wearable structure 811 can include flexible electronic connectors that interconnect sensors 813, the electronic circuitry, and/or other electronic components (described below in reference to FIG. 9) that are enclosed in wearable band 810. In some embodiments, the flexible electronic connectors are configured to interconnect sensors 813, the electronic circuitry, and/or other electronic components of wearable band 810 with respective sensors and/or other electronic components of another electronic device (e.g., watch body 820). The flexible electronic connectors are configured to move with wearable structure 811 such that the user adjustment to wearable structure 811 (e.g., resizing, pulling, folding, etc.) does not stress or strain the electrical coupling of components of wearable band 810.

As described above, wearable band 810 is configured to be worn by a user. In particular, wearable band 810 can be shaped or otherwise manipulated to be worn by a user. For example, wearable band 810 can be shaped to have a substantially circular shape such that it can be configured to be worn on the user's lower arm or wrist. Alternatively, wearable band 810 can be shaped to be worn on another body part of the user, such as the user's upper arm (e.g., around a bicep), forearm, chest, legs, etc. Wearable band 810 can include a retaining mechanism 812 (e.g., a buckle, a hook and loop fastener, etc.) for securing wearable band 810 to the user's wrist or other body part. While wearable band 810 is worn by the user, sensors 813 sense data (referred to as sensor data) from the user's skin. In some examples, sensors 813 of wearable band 810 obtain (e.g., sense and record) neuromuscular signals.

The sensed data (e.g., sensed neuromuscular signals) can be used to detect and/or determine the user's intention to perform certain motor actions. In some examples, sensors 813 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 805 of wrist-wearable device 800 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using submuscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 813 can be used to provide a user with an enhanced interaction with a physical object (e.g., devices communicatively coupled with wearable band 810) and/or a virtual object in an artificial-reality application generated by an artificial-reality system (e.g., user interface objects presented on the display 805, or another computing device (e.g., a smartphone)).

In some embodiments, wearable band 810 includes one or more haptic devices 946 (e.g., a vibratory haptic actuator) that are configured to provide haptic feedback (e.g., a cutaneous and/or kinesthetic sensation, etc.) to the user's skin. Sensors 813 and/or haptic devices 946 (shown in FIG. 9) can be configured to operate in conjunction with multiple applications including, without limitation, health monitoring, social media, games, and artificial reality (e.g., the applications associated with artificial reality).

Wearable band 810 can also include coupling mechanism 816 for detachably coupling a capsule (e.g., a computing unit) or watch body 820 (via a coupling surface of the watch body 820) to wearable band 810. For example, a cradle or a shape of coupling mechanism 816 can correspond to shape of watch body 820 of wrist-wearable device 800. In particular, coupling mechanism 816 can be configured to receive a coupling surface proximate to the bottom side of watch body 820 (e.g., a side opposite to a front side of watch body 820 where display 805 is located), such that a user can push watch body 820 downward into coupling mechanism 816 to attach watch body 820 to coupling mechanism 816. In some embodiments, coupling mechanism 816 can be configured to receive a top side of the watch body 820 (e.g., a side proximate to the front side of watch body 820 where display 805 is located) that is pushed upward into the cradle, as opposed to being pushed downward into coupling mechanism 816. In some embodiments, coupling mechanism 816 is an integrated component of wearable band 810 such that wearable band 810 and coupling mechanism 816 are a single unitary structure. In some embodiments, coupling mechanism 816 is a type of frame or shell that allows watch body 820 coupling surface to be retained within or on wearable band 810 coupling mechanism 816 (e.g., a cradle, a tracker band, a support base, a clasp, etc.).

Coupling mechanism 816 can allow for watch body 820 to be detachably coupled to the wearable band 810 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 820 to wearable band 810 and to decouple the watch body 820 from the wearable band 810. For example, a user can twist, slide, turn, push, pull, or rotate watch body 820 relative to wearable band 810, or a combination thereof, to attach watch body 820 to wearable band 810 and to detach watch body 820 from wearable band 810. Alternatively, as discussed below, in some embodiments, the watch body 820 can be decoupled from the wearable band 810 by actuation of a release mechanism 829.

Wearable band 810 can be coupled with watch body 820 to increase the functionality of wearable band 810 (e.g., converting wearable band 810 into wrist-wearable device 800, adding an additional computing unit and/or battery to increase computational resources and/or a battery life of wearable band 810, adding additional sensors to improve sensed data, etc.). As described above, wearable band 810 and coupling mechanism 816 are configured to operate independently (e.g., execute functions independently) from watch body 820. For example, coupling mechanism 816 can include one or more sensors 813 that contact a user's skin when wearable band 810 is worn by the user, with or without watch body 820 and can provide sensor data for determining control commands.

A user can detach watch body 820 from wearable band 810 to reduce the encumbrance of wrist-wearable device 800 to the user. For embodiments in which watch body 820 is removable, watch body 820 can be referred to as a removable structure, such that in these embodiments wrist-wearable device 800 includes a wearable portion (e.g., wearable band 810) and a removable structure (e.g., watch body 820).

Turning to watch body 820, in some examples watch body 820 can have a substantially rectangular or circular shape. Watch body 820 is configured to be worn by the user on their wrist or on another body part. More specifically, watch body 820 is sized to be easily carried by the user, attached on a portion of the user's clothing, and/or coupled to wearable band 810 (forming the wrist-wearable device 800). As described above, watch body 820 can have a shape corresponding to coupling mechanism 816 of wearable band 810. In some embodiments, watch body 820 includes a single release mechanism 829 or multiple release mechanisms (e.g., two release mechanisms 829 positioned on opposing sides of watch body 820, such as spring-loaded buttons) for decoupling watch body 820 from wearable band 810. Release mechanism 829 can include, without limitation, a button, a knob, a plunger, a handle, a lever, a fastener, a clasp, a dial, a latch, or a combination thereof.

A user can actuate release mechanism 829 by pushing, turning, lifting, depressing, shifting, or performing other actions on release mechanism 829. Actuation of release mechanism 829 can release (e.g., decouple) watch body 820 from coupling mechanism 816 of wearable band 810, allowing the user to use watch body 820 independently from wearable band 810 and vice versa. For example, decoupling watch body 820 from wearable band 810 can allow a user to capture images using rear-facing camera 825b. Although release mechanism 829 is shown positioned at a corner of watch body 820, release mechanism 829 can be positioned anywhere on watch body 820 that is convenient for the user to actuate. In addition, in some embodiments, wearable band 810 can also include a respective release mechanism for decoupling watch body 820 from coupling mechanism 816. In some embodiments, release mechanism 829 is optional and watch body 820 can be decoupled from coupling mechanism 816 as described above (e.g., via twisting, rotating, etc.).

Watch body 820 can include one or more peripheral buttons 823 and 827 for performing various operations at watch body 820. For example, peripheral buttons 823 and 827 can be used to turn on or wake (e.g., transition from a sleep state to an active state) display 805, unlock watch body 820, increase or decrease a volume, increase or decrease a brightness, interact with one or more applications, interact with one or more user interfaces, etc. Additionally, or alternatively, in some embodiments, display 805 operates as a touch screen and allows the user to provide one or more inputs for interacting with watch body 820.

In some embodiments, watch body 820 includes one or more sensors 821. Sensors 821 of watch body 820 can be the same or distinct from sensors 813 of wearable band 810. Sensors 821 of watch body 820 can be distributed on an inside and/or an outside surface of watch body 820. In some embodiments, sensors 821 are configured to contact a user's skin when watch body 820 is worn by the user. For example, sensors 821 can be placed on the bottom side of watch body 820 and coupling mechanism 816 can be a cradle with an opening that allows the bottom side of watch body 820 to directly contact the user's skin. Alternatively, in some embodiments, watch body 820 does not include sensors that are configured to contact the user's skin (e.g., including sensors internal and/or external to the watch body 820 that are configured to sense data of watch body 820 and the surrounding environment). In some embodiments, sensors 821 are configured to track a position and/or motion of watch body 820.

Watch body 820 and wearable band 810 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 820 and wearable band 810 can share data sensed by sensors 813 and 821, as well as application and device specific information (e.g., active and/or available applications, output devices (e.g., displays, speakers, etc.), input devices (e.g., touch screens, microphones, imaging sensors, etc.).

In some embodiments, watch body 820 can include, without limitation, a front-facing camera 825a and/or a rear-facing camera 825b, sensors 821 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 963), a touch sensor, a sweat sensor, etc.). In some embodiments, watch body 820 can include one or more haptic devices 976 (e.g., a vibratory haptic actuator) that is configured to provide haptic feedback (e.g., a cutaneous and/or kinesthetic sensation, etc.) to the user. Sensors 921 and/or haptic device 976 can also be configured to operate in conjunction with multiple applications including, without limitation, health monitoring applications, social media applications, game applications, and artificial reality applications (e.g., the applications associated with artificial reality).

As described above, watch body 820 and wearable band 810, when coupled, can form wrist-wearable device 800. When coupled, watch body 820 and wearable band 810 may operate as a single device to execute functions (operations, detections, communications, etc.) described herein. In some embodiments, each device may be provided with particular instructions for performing the one or more operations of wrist-wearable device 800. For example, in accordance with a determination that watch body 820 does not include neuromuscular signal sensors, wearable band 810 can include alternative instructions for performing associated instructions (e.g., providing sensed neuromuscular signal data to watch body 820 via a different electronic device). Operations of wrist-wearable device 800 can be performed by watch body 820 alone or in conjunction with wearable band 810 (e.g., via respective processors and/or hardware components) and vice versa. In some embodiments, operations of wrist-wearable device 800, watch body 820, and/or wearable band 810 can be performed in conjunction with one or more processors and/or hardware components.

As described below with reference to the block diagram of FIG. 9, wearable band 810 and/or watch body 820 can each include independent resources required to independently execute functions. For example, wearable band 810 and/or watch body 820 can each include a power source (e.g., a battery), a memory, data storage, a processor (e.g., a central processing unit (CPU)), communications, a light source, and/or input/output devices.

FIG. 9 shows block diagrams of a computing system 930 corresponding to wearable band 810 and a computing system 960 corresponding to watch body 820 according to some embodiments. Computing system 900 of wrist-wearable device 800 may include a combination of components of wearable band computing system 930 and watch body computing system 960, in accordance with some embodiments.

Watch body 820 and/or wearable band 810 can include one or more components shown in watch body computing system 960. In some embodiments, a single integrated circuit may include all or a substantial portion of the components of watch body computing system 960 included in a single integrated circuit. Alternatively, in some embodiments, components of the watch body computing system 960 may be included in a plurality of integrated circuits that are communicatively coupled. In some embodiments, watch body computing system 960 may be configured to couple (e.g., via a wired or wireless connection) with wearable band computing system 930, which may allow the computing systems to share components, distribute tasks, and/or perform other operations described herein (individually or as a single device).

Watch body computing system 960 can include one or more processors 979, a controller 977, a peripherals interface 961, a power system 995, and memory (e.g., a memory 980).

Power system 995 can include a charger input 996, a power-management integrated circuit (PMIC) 997, and a battery 998. In some embodiments, a watch body 820 and a wearable band 810 can have respective batteries (e.g., battery 998 and 959) and can share power with each other. Watch body 820 and wearable band 810 can receive a charge using a variety of techniques. In some embodiments, watch body 820 and wearable band 810 can use a wired charging assembly (e.g., power cords) to receive the charge. Alternatively, or in addition, watch body 820 and/or wearable band 810 can be configured for wireless charging. For example, a portable charging device can be designed to mate with a portion of watch body 820 and/or wearable band 810 and wirelessly deliver usable power to battery 998 of watch body 820 and/or battery 959 of wearable band 810. Watch body 820 and wearable band 810 can have independent power systems (e.g., power system 995 and 956, respectively) to enable each to operate independently. Watch body 820 and wearable band 810 can also share power (e.g., one can charge the other) via respective PMICs (e.g., PMICs 997 and 958) and charger inputs (e.g., 957 and 996) that can share power over power and ground conductors and/or over wireless charging antennas.

In some embodiments, peripherals interface 961 can include one or more sensors 921. Sensors 921 can include one or more coupling sensors 962 for detecting when watch body 820 is coupled with another electronic device (e.g., a wearable band 810). Sensors 921 can include one or more imaging sensors 963 (e.g., one or more of cameras 925, and/or separate imaging sensors 963 (e.g., thermal-imaging sensors)). In some embodiments, sensors 921 can include one or more SpO2 sensors 964. In some embodiments, sensors 921 can include one or more biopotential-signal sensors (e.g., EMG sensors 965, which may be disposed on an interior, user-facing portion of watch body 820 and/or wearable band 810). In some embodiments, sensors 921 may include one or more capacitive sensors 966. In some embodiments, sensors 921 may include one or more heart rate sensors 967. In some embodiments, sensors 921 may include one or more IMU sensors 968. In some embodiments, one or more IMU sensors 968 can be configured to detect movement of a user's hand or other location where watch body 820 is placed or held.

In some embodiments, one or more of sensors 921 may provide an example human-machine interface. For example, a set of neuromuscular sensors, such as EMG sensors 965, may be arranged circumferentially around wearable band 810 with an interior surface of EMG sensors 965 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 810 can be used to generate control information for controlling an augmented reality system, a robot, controlling a vehicle, scrolling through text, controlling a virtual avatar, or any other suitable control task.

In some embodiments, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other embodiments, at least some signal processing of the output of the sensing components can be performed in software such as processors 979. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 965 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the embodiments described herein can also be implemented in wearable interfaces with other types of sensors including, but not limited to, mechanomyography (MMG) sensors, sonomyography (SMG) sensors, and electrical impedance tomography (EIT) sensors.

In some embodiments, peripherals interface 961 includes a near-field communication (NFC) component 969, a global-position system (GPS) component 970, a long-term evolution (LTE) component 971, and/or a Wi-Fi and/or Bluetooth communication component 972. In some embodiments, peripherals interface 961 includes one or more buttons 973 (e.g., peripheral buttons 823 and 827 in FIG. 8), which, when selected by a user, cause operation to be performed at watch body 820. In some embodiments, the peripherals interface 961 includes one or more indicators, such as a light emitting diode (LED), to provide a user with visual indicators (e.g., message received, low battery, active microphone and/or camera, etc.).

Watch body 820 can include at least one display 805 for displaying visual representations of information or data to a user, including user-interface elements and/or three-dimensional virtual objects. The display can also include a touch screen for inputting user inputs, such as touch gestures, swipe gestures, and the like. Watch body 820 can include at least one speaker 974 and at least one microphone 975 for providing audio signals to the user and receiving audio input from the user. The user can provide user inputs through microphone 975 and can also receive audio output from speaker 974 as part of a haptic event provided by haptic controller 978. Watch body 820 can include at least one camera 925, including a front camera 925a and a rear camera 925b. Cameras 925 can include ultra-wide-angle cameras, wide angle cameras, fish-eye cameras, spherical cameras, telephoto cameras, depth-sensing cameras, or other types of cameras.

Watch body computing system 960 can include one or more haptic controllers 978 and associated componentry (e.g., haptic devices 976) for providing haptic events at watch body 820 (e.g., a vibrating sensation or audio output in response to an event at the watch body 820). Haptic controllers 978 can communicate with one or more haptic devices 976, such as electroacoustic devices, including a speaker of the one or more speakers 974 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 978 can provide haptic events to that are capable of being sensed by a user of watch body 820. In some embodiments, one or more haptic controllers 978 can receive input signals from an application of applications 982.

In some embodiments, wearable band computing system 930 and/or watch body computing system 960 can include memory 980, which can be controlled by one or more memory controllers of controllers 977. In some embodiments, software components stored in memory 980 include one or more applications 982 configured to perform operations at the watch body 820. In some embodiments, one or more applications 982 may include games, word processors, messaging applications, calling applications, web browsers, social media applications, media streaming applications, financial applications, calendars, clocks, etc. In some embodiments, software components stored in memory 980 include one or more communication interface modules 983 as defined above. In some embodiments, software components stored in memory 980 include one or more graphics modules 984 for rendering, encoding, and/or decoding audio and/or visual data and one or more data management modules 985 for collecting, organizing, and/or providing access to data 987 stored in memory 980. In some embodiments, one or more of applications 982 and/or one or more modules can work in conjunction with one another to perform various tasks at the watch body 820.

In some embodiments, software components stored in memory 980 can include one or more operating systems 981 (e.g., a Linux-based operating system, an Android operating system, etc.). Memory 980 can also include data 987. Data 987 can include profile data 988A, sensor data 989A, media content data 990, and application data 991.

It should be appreciated that watch body computing system 960 is an example of a computing system within watch body 820, and that watch body 820 can have more or fewer components than shown in watch body computing system 960, can combine two or more components, and/or can have a different configuration and/or arrangement of the components. The various components shown in watch body computing system 960 are implemented in hardware, software, firmware, or a combination thereof, including one or more signal processing and/or application-specific integrated circuits.

Turning to the wearable band computing system 930, one or more components that can be included in wearable band 810 are shown. Wearable band computing system 930 can include more or fewer components than shown in watch body computing system 960, can combine two or more components, and/or can have a different configuration and/or arrangement of some or all of the components. In some embodiments, all, or a substantial portion of the components of wearable band computing system 930 are included in a single integrated circuit. Alternatively, in some embodiments, components of wearable band computing system 930 are included in a plurality of integrated circuits that are communicatively coupled. As described above, in some embodiments, wearable band computing system 930 is configured to couple (e.g., via a wired or wireless connection) with watch body computing system 960, which allows the computing systems to share components, distribute tasks, and/or perform other operations described herein (individually or as a single device).

Wearable band computing system 930, similar to watch body computing system 960, can include one or more processors 949, one or more controllers 947 (including one or more haptics controllers 948), a peripherals interface 931 that can includes one or more sensors 913 and other peripheral devices, a power source (e.g., a power system 956), and memory (e.g., a memory 950) that includes an operating system (e.g., an operating system 951), data (e.g., data 954 including profile data 988B, sensor data 989B, etc.), and one or more modules (e.g., a communications interface module 952, a data management module 953, etc.).

One or more of sensors 913 can be analogous to sensors 921 of watch body computing system 960. For example, sensors 913 can include one or more coupling sensors 932, one or more SpO2 sensors 934, one or more EMG sensors 935, one or more capacitive sensors 936, one or more heart rate sensors 937, and one or more IMU sensors 938.

Peripherals interface 931 can also include other components analogous to those included in peripherals interface 961 of watch body computing system 960, including an NFC component 939, a GPS component 940, an LTE component 941, a Wi-Fi and/or Bluetooth communication component 942, and/or one or more haptic devices 946 as described above in reference to peripherals interface 961. In some embodiments, peripherals interface 931 includes one or more buttons 943, a display 933, a speaker 944, a microphone 945, and a camera 955. In some embodiments, peripherals interface 931 includes one or more indicators, such as an LED.

It should be appreciated that wearable band computing system 930 is an example of a computing system within wearable band 810, and that wearable band 810 can have more or fewer components than shown in wearable band computing system 930, combine two or more components, and/or have a different configuration and/or arrangement of the components. The various components shown in wearable band computing system 930 can be implemented in one or more of a combination of hardware, software, or firmware, including one or more signal processing and/or application-specific integrated circuits.

Wrist-wearable device 800 with respect to FIG. 8 is an example of wearable band 810 and watch body 820 coupled together, so wrist-wearable device 800 will be understood to include the components shown and described for wearable band computing system 930 and watch body computing system 960. In some embodiments, wrist-wearable device 800 has a split architecture (e.g., a split mechanical architecture, a split electrical architecture, etc.) between watch body 820 and wearable band 810. In other words, all of the components shown in wearable band computing system 930 and watch body computing system 960 can be housed or otherwise disposed in a combined wrist-wearable device 800 or within individual components of watch body 820, wearable band 810, and/or portions thereof (e.g., a coupling mechanism 816 of wearable band 810).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some embodiments, wrist-wearable device 800 can be used in conjunction with a head-wearable device (e.g., AR system 1000 and VR system 1100) and/or an HIPD, and wrist-wearable device 800 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR system 1000 and VR system 1100.

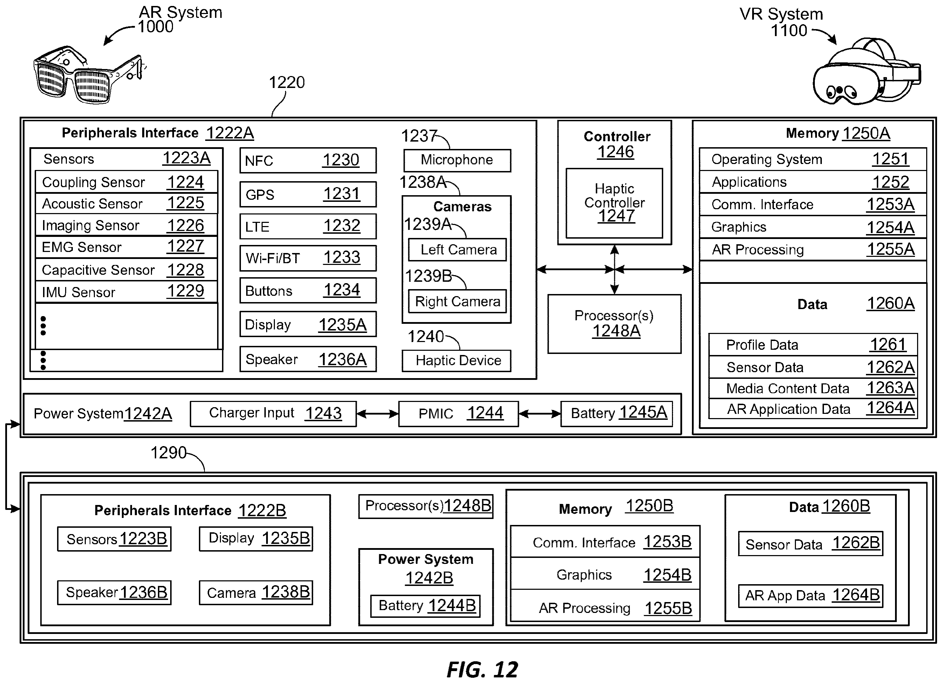

FIGS. 10 to 12 show example artificial-reality systems, which can be used as or in connection with wrist-wearable device 800. In some embodiments, AR system 1000 includes an eyewear device 1002, as shown in FIG. 10. In some embodiments, VR system 1100 includes a head-mounted display (HMD) 1112, as shown in FIGS. 11A and 11B. In some embodiments, AR system 1000 and VR system 1100 can include one or more analogous components (e.g., components for presenting interactive artificial-reality environments, such as processors, memory, and/or presentation devices, including one or more displays and/or one or more waveguides), some of which are described in more detail with respect to FIG. 12. As described herein, a head-wearable device can include components of eyewear device 1002 and/or head-mounted display 1112. Some embodiments of head-wearable devices do not include any displays, including any of the displays described with respect to AR system 1000 and/or VR system 1100. While the example artificial-reality systems are respectively described herein as AR system 1000 and VR system 1100, either or both of the example AR systems described herein can be configured to present fully-immersive virtual-reality scenes presented in substantially all of a user's field of view or subtler augmented-reality scenes that are presented within a portion, less than all, of the user's field of view.

FIG. 10 show an example visual depiction of AR system 1000, including an eyewear device 1002 (which may also be described herein as augmented-reality glasses, and/or smart glasses). AR system 1000 can include additional electronic components that are not shown in FIG. 10, such as a wearable accessory device and/or an intermediary processing device, in electronic communication or otherwise configured to be used in conjunction with the eyewear device 1002. In some embodiments, the wearable accessory device and/or the intermediary processing device may be configured to couple with eyewear device 1002 via a coupling mechanism in electronic communication with a coupling sensor 1224 (FIG. 12), where coupling sensor 1224 can detect when an electronic device becomes physically or electronically coupled with eyewear device 1002. In some embodiments, eyewear device 1002 can be configured to couple to a housing 1290 (FIG. 12), which may include one or more additional coupling mechanisms configured to couple with additional accessory devices. The components shown in FIG. 10 can be implemented in hardware, software, firmware, or a combination thereof, including one or more signal-processing components and/or application-specific integrated circuits (ASICs).

Eyewear device 1002 includes mechanical glasses components, including a frame 1004 configured to hold one or more lenses (e.g., one or both lenses 1006-1 and 1006-2). One of ordinary skill in the art will appreciate that eyewear device 1002 can include additional mechanical components, such as hinges configured to allow portions of frame 1004 of eyewear device 1002 to be folded and unfolded, a bridge configured to span the gap between lenses 1006-1 and 1006-2 and rest on the user's nose, nose pads configured to rest on the bridge of the nose and provide support for eyewear device 1002, earpieces configured to rest on the user's ears and provide additional support for eyewear device 1002, temple arms configured to extend from the hinges to the earpieces of eyewear device 1002, and the like. One of ordinary skill in the art will further appreciate that some examples of AR system 1000 can include none of the mechanical components described herein. For example, smart contact lenses configured to present artificial reality to users may not include any components of eyewear device 1002.

Eyewear device 1002 includes electronic components, many of which will be described in more detail below with respect to FIG. 10. Some example electronic components are illustrated in FIG. 10, including acoustic sensors 1025-1, 1025-2, 1025-3, 1025-4, 1025-5, and 1025-6, which can be distributed along a substantial portion of the frame 1004 of eyewear device 1002. Eyewear device 1002 also includes a left camera 1039A and a right camera 1039B, which are located on different sides of the frame 1004. Eyewear device 1002 also includes a processor 1048 (or any other suitable type or form of integrated circuit) that is embedded into a portion of the frame 1004.

FIGS. 11A and 11B show a VR system 1100 that includes a head-mounted display (HMD) 1112 (e.g., also referred to herein as an artificial-reality headset, a head-wearable device, a VR headset, etc.), in accordance with some embodiments. As noted, some artificial-reality systems (e.g., AR system 1000) may, instead of blending an artificial reality with actual reality, substantially replace one or more of a user's visual and/or other sensory perceptions of the real world with a virtual experience (e.g., AR systems 600 and 700).

HMD 1112 includes a front body 1114 and a frame 1116 (e.g., a strap or band) shaped to fit around a user's head. In some embodiments, front body 1114 and/or frame 1116 include one or more electronic elements for facilitating presentation of and/or interactions with an AR and/or VR system (e.g., displays, IMUs, tracking emitter or detectors). In some embodiments, HMD 1112 includes output audio transducers (e.g., an audio transducer 1118), as shown in FIG. 11B. In some embodiments, one or more components, such as the output audio transducer(s) 1118 and frame 1116, can be configured to attach and detach (e.g., are detachably attachable) to HMD 1112 (e.g., a portion or all of frame 1116, and/or audio transducer 1118), as shown in FIG. 11B. In some embodiments, coupling a detachable component to HMD 1112 causes the detachable component to come into electronic communication with HMD 1112.

FIGS. 11A and 11B also show that VR system 1100 includes one or more cameras, such as left camera 1139A and right camera 1139B, which can be analogous to left and right cameras 1039A and 1039B on frame 1004 of eyewear device 1002. In some embodiments, VR system 1100 includes one or more additional cameras (e.g., cameras 1139C and 1139D), which can be configured to augment image data obtained by left and right cameras 1139A and 1139B by providing more information. For example, camera 1139C can be used to supply color information that is not discerned by cameras 1139A and 1139B. In some embodiments, one or more of cameras 1139A to 1139D can include an optional IR cut filter configured to remove IR light from being received at the respective camera sensors.

FIG. 12 illustrates a computing system 1220 and an optional housing 1290, each of which show components that can be included in AR system 1000 and/or VR system 1100. In some embodiments, more or fewer components can be included in optional housing 1290 depending on practical restraints of the respective AR system being described.

In some embodiments, computing system 1220 can include one or more peripherals interfaces 1222A and/or optional housing 1290 can include one or more peripherals interfaces 1222B. Each of computing system 1220 and optional housing 1290 can also include one or more power systems 1242A and 1242B, one or more controllers 1246 (including one or more haptic controllers 1247), one or more processors 1248A and 1248B (as defined above, including any of the examples provided), and memory 1250A and 1250B, which can all be in electronic communication with each other. For example, the one or more processors 1248A and 1248B can be configured to execute instructions stored in memory 1250A and 1250B, which can cause a controller of one or more of controllers 1246 to cause operations to be performed at one or more peripheral devices connected to peripherals interface 1222A and/or 1222B. In some embodiments, each operation described can be powered by electrical power provided by power system 1242A and/or 1242B.

In some embodiments, peripherals interface 1222A can include one or more devices configured to be part of computing system 1220, some of which have been defined above and/or described with respect to the wrist-wearable devices shown in FIGS. 8 and 9. For example, peripherals interface 1222A can include one or more sensors 1223A. Some example sensors 1223A include one or more coupling sensors 1224, one or more acoustic sensors 1225, one or more imaging sensors 1226, one or more EMG sensors 1227, one or more capacitive sensors 1228, one or more IMU sensors 1229, and/or any other types of sensors explained above or described with respect to any other embodiments discussed herein.

In some embodiments, peripherals interfaces 1222A and 1222B can include one or more additional peripheral devices, including one or more NFC devices 1230, one or more GPS devices 1231, one or more LTE devices 1232, one or more Wi-Fi and/or Bluetooth devices 1233, one or more buttons 1234 (e.g., including buttons that are slidable or otherwise adjustable), one or more displays 1235A and 1235B, one or more speakers 1236A and 1236B, one or more microphones 1237, one or more cameras 1238A and 1238B (e.g., including the left camera 1239A and/or a right camera 1239B), one or more haptic devices 1240, and/or any other types of peripheral devices defined above or described with respect to any other embodiments discussed herein.

AR systems can include a variety of types of visual feedback mechanisms (e.g., presentation devices). For example, display devices in AR system 1000 and/or VR system 1100 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some embodiments of AR systems also include optical subsystems having one or more lenses (e.g., conventional concave or convex lenses, Fresnel lenses, or adjustable liquid lenses) through which a user can view a display screen.

For example, respective displays 1235A and 1235B can be coupled to each of the lenses 1006-1 and 1006-2 of AR system 1000. Displays 1235A and 1235B may be coupled to each of lenses 1006-1 and 1006-2, which can act together or independently to present an image or series of images to a user. In some embodiments, AR system 1000 includes a single display 1235A or 1235B (e.g., a near-eye display) or more than two displays 1235A and 1235B. In some embodiments, a first set of one or more displays 1235A and 1235B can be used to present an augmented-reality environment, and a second set of one or more display devices 1235A and 1235B can be used to present a virtual-reality environment. In some embodiments, one or more waveguides are used in conjunction with presenting artificial-reality content to the user of AR system 1000 (e.g., as a means of delivering light from one or more displays 1235A and 1235B to the user's eyes). In some embodiments, one or more waveguides are fully or partially integrated into the eyewear device 1002. Additionally, or alternatively to display screens, some artificial-reality systems include one or more projection systems. For example, display devices in AR system 1000 and/or VR system 1100 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some embodiments, one or more waveguides are provided additionally or alternatively to the one or more display(s) 1235A and 1235B.

Computing system 1220 and/or optional housing 1290 of AR system 1000 or VR system 1100 can include some or all of the components of a power system 1242A and 1242B. Power systems 1242A and 1242B can include one or more charger inputs 1243, one or more PMICs 1244, and/or one or more batteries 1245A and 1244B.

Memory 1250A and 1250B may include instructions and data, some or all of which may be stored as non-transitory computer-readable storage media within the memories 1250A and 1250B. For example, memory 1250A and 1250B can include one or more operating systems 1251, one or more applications 1252, one or more communication interface applications 1253A and 1253B, one or more graphics applications 1254A and 1254B, one or more AR processing applications 1255A and 1255B, and/or any other types of data defined above or described with respect to any other embodiments discussed herein.

Memory 1250A and 1250B also include data 1260A and 1260B, which can be used in conjunction with one or more of the applications discussed above. Data 1260A and 1260B can include profile data 1261, sensor data 1262A and 1262B, media content data 1263A, AR application data 1264A and 1264B, and/or any other types of data defined above or described with respect to any other embodiments discussed herein.

In some embodiments, controller 1246 of eyewear device 1002 may process information generated by sensors 1223A and/or 1223B on eyewear device 1002 and/or another electronic device within AR system 1000. For example, controller 1246 can process information from acoustic sensors 1025-1 and 1025-2. For each detected sound, controller 1246 can perform a direction of arrival (DOA) estimation to estimate a direction from which the detected sound arrived at eyewear device 1002 of AR system 1000. As one or more of acoustic sensors 1225 (e.g., the acoustic sensors 1025-1, 1025-2) detects sounds, controller 1246 can populate an audio data set with the information (e.g., represented as sensor data 1262A and 1262B).

In some embodiments, a physical electronic connector can convey information between eyewear device 1002 and another electronic device and/or between one or more processors 1048, 1248A, 1248B of AR system 1000 or VR system 1100 and controller 1246. The information can be in the form of optical data, electrical data, wireless data, or any other transmittable data form. Moving the processing of information generated by eyewear device 1002 to an intermediary processing device can reduce weight and heat in the eyewear device, making it more comfortable and safer for a user. In some embodiments, an optional wearable accessory device (e.g., an electronic neckband) is coupled to eyewear device 1002 via one or more connectors. The connectors can be wired or wireless connectors and can include electrical and/or non-electrical (e.g., structural) components. In some embodiments, eyewear device 1002 and the wearable accessory device can operate independently without any wired or wireless connection between them.

In some situations, pairing external devices, such as an intermediary processing device (e.g., HIPD 406, 506, 606) with eyewear device 1002 (e.g., as part of AR system 1000) enables eyewear device 1002 to achieve a similar form factor of a pair of glasses while still providing sufficient battery and computation power for expanded capabilities. Some, or all, of the battery power, computational resources, and/or additional features of AR system 1000 can be provided by a paired device or shared between a paired device and eyewear device 1002, thus reducing the weight, heat profile, and form factor of eyewear device 1002 overall while allowing eyewear device 1002 to retain its desired functionality. For example, the wearable accessory device can allow components that would otherwise be included on eyewear device 1002 to be included in the wearable accessory device and/or intermediary processing device, thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on eyewear device 1002 standing alone. Because weight carried in the wearable accessory device can be less invasive to a user than weight carried in the eyewear device 1002, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 1000 and/or VR system 1100 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some embodiments, the methods described herein are used to map the real world, to provide a user with context about real-world surroundings, and/or to generate digital twins (e.g., interactable virtual objects), among a variety of other functions. For example, FIGS. 11A and 11B show VR system 1100 having cameras 1139A to 1139D, which can be used to provide depth information for creating a voxel field and a two-dimensional mesh to provide object information to the user to avoid collisions.

In some embodiments, AR system 1000 and/or VR system 1100 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some embodiments of an artificial reality system, such as AR system 1000 and/or VR system 1100, ambient light (e.g., a live feed of the surrounding environment that a user would normally see) can be passed through a display element of a respective head-wearable device presenting aspects of the AR system. In some embodiments, ambient light can be passed through a portion less that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

In some embodiments, the systems described herein may also include an eye-tracking subsystem designed to identify and track various characteristics of a user's eye(s), such as the user's gaze direction. The phrase "eye tracking" may, in some examples, refer to a process by which the position, orientation, and/or motion of an eye is measured, detected, sensed, determined, and/or monitored. The disclosed systems may measure the position, orientation, and/or motion of an eye in a variety of different ways, including through the use of various optical-based eye-tracking techniques, ultrasound-based eye-tracking techniques, etc. An eye-tracking subsystem may be configured in a number of different ways and may include a variety of different eye-tracking hardware components or other computer-vision components. For example, an eye-tracking subsystem may include a variety of different optical sensors, such as two-dimensional (2D) or 3D cameras, time-of-flight depth sensors, single-beam or sweeping laser rangefinders, 3D LiDAR sensors, and/or any other suitable type or form of optical sensor. In this example, a processing subsystem may process data from one or more of these sensors to measure, detect, determine, and/or otherwise monitor the position, orientation, and/or motion of the user's eye(s).

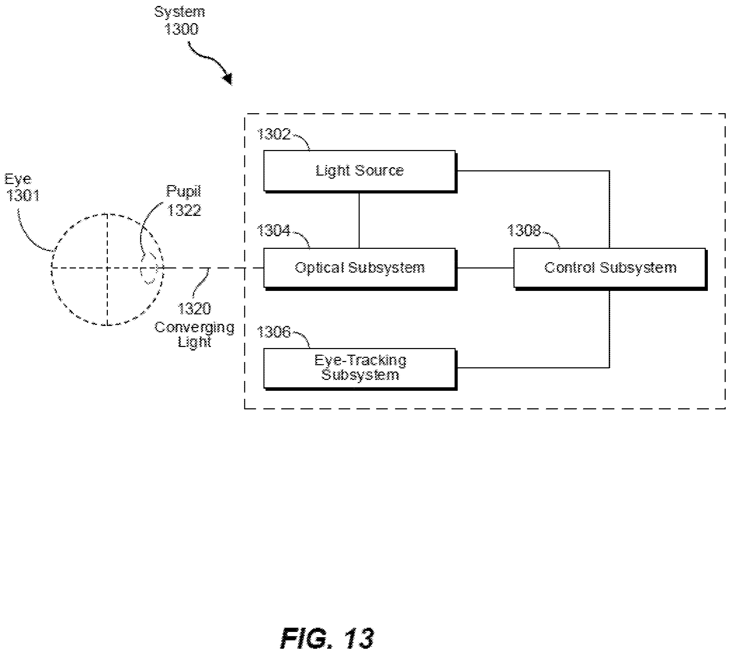

FIG. 13 is an illustration of an example system 1300 that incorporates an eye-tracking subsystem capable of tracking a user's eye(s). As depicted in FIG. 13, system 1300 may include a light source 1302, an optical subsystem 1304, an eye-tracking subsystem 1306, and/or a control subsystem 1308. In some examples, light source 1302 may generate light for an image (e.g., to be presented to an eye 1301 of the viewer). Light source 1302 may represent any of a variety of suitable devices. For example, light source 1302 can include a two-dimensional projector (e.g., a LCoS display), a scanning source (e.g., a scanning laser), or other device (e.g., an LCD, an LED display, an OLED display, an active-matrix OLED display (AMOLED), a transparent OLED display (TOLED), a waveguide, or some other display capable of generating light for presenting an image to the viewer). In some examples, the image may represent a virtual image, which may refer to an optical image formed from the apparent divergence of light rays from a point in space, as opposed to an image formed from the light ray's actual divergence.

In some embodiments, optical subsystem 1304 may receive the light generated by light source 1302 and generate, based on the received light, converging light 1320 that includes the image. In some examples, optical subsystem 1304 may include any number of lenses (e.g., Fresnel lenses, convex lenses, concave lenses), apertures, filters, mirrors, prisms, and/or other optical components, possibly in combination with actuators and/or other devices. In particular, the actuators and/or other devices may translate and/or rotate one or more of the optical components to alter one or more aspects of converging light 1320. Further, various mechanical couplings may serve to maintain the relative spacing and/or the orientation of the optical components in any suitable combination.

In one embodiment, eye-tracking subsystem 1306 may generate tracking information indicating a gaze angle of an eye 1301 of the viewer. In this embodiment, control subsystem 1308 may control aspects of optical subsystem 1304 (e.g., the angle of incidence of converging light 1320) based at least in part on this tracking information. Additionally, in some examples, control subsystem 1308 may store and utilize historical tracking information (e.g., a history of the tracking information over a given duration, such as the previous second or fraction thereof) to anticipate the gaze angle of eye 1301 (e.g., an angle between the visual axis and the anatomical axis of eye 1301). In some embodiments, eye-tracking subsystem 1306 may detect radiation emanating from some portion of eye 1301 (e.g., the cornea, the iris, the pupil, or the like) to determine the current gaze angle of eye 1301. In other examples, eye-tracking subsystem 1306 may employ a wavefront sensor to track the current location of the pupil.

Any number of techniques can be used to track eye 1301. Some techniques may involve illuminating eye 1301 with infrared light and measuring reflections with at least one optical sensor that is tuned to be sensitive to the infrared light. Information about how the infrared light is reflected from eye 1301 may be analyzed to determine the position(s), orientation(s), and/or motion(s) of one or more eye feature(s), such as the cornea, pupil, iris, and/or retinal blood vessels.

In some examples, the radiation captured by a sensor of eye-tracking subsystem 1306 may be digitized (i.e., converted to an electronic signal). Further, the sensor may transmit a digital representation of this electronic signal to one or more processors (for example, processors associated with a device including eye-tracking subsystem 1306). Eye-tracking subsystem 1306 may include any of a variety of sensors in a variety of different configurations. For example, eye-tracking subsystem 1306 may include an infrared detector that reacts to infrared radiation. The infrared detector may be a thermal detector, a photonic detector, and/or any other suitable type of detector. Thermal detectors may include detectors that react to thermal effects of the incident infrared radiation.

In some examples, one or more processors may process the digital representation generated by the sensor(s) of eye-tracking subsystem 1306 to track the movement of eye 1301. In another example, these processors may track the movements of eye 1301 by executing algorithms represented by computer-executable instructions stored on non-transitory memory. In some examples, on-chip logic (e.g., an application-specific integrated circuit or ASIC) may be used to perform at least portions of such algorithms. As noted, eye-tracking subsystem 1306 may be programmed to use an output of the sensor(s) to track movement of eye 1301. In some embodiments, eye-tracking subsystem 1306 may analyze the digital representation generated by the sensors to extract eye rotation information from changes in reflections. In one embodiment, eye-tracking subsystem 1306 may use corneal reflections or glints (also known as Purkinje images) and/or the center of the eye's pupil 1322 as features to track over time.

In some embodiments, eye-tracking subsystem 1306 may use the center of the eye's pupil 1322 and infrared or near-infrared, non-collimated light to create corneal reflections. In these embodiments, eye-tracking subsystem 1306 may use the vector between the center of the eye's pupil 1322 and the corneal reflections to compute the gaze direction of eye 1301. In some embodiments, the disclosed systems may perform a calibration procedure for an individual (using, e.g., supervised or unsupervised techniques) before tracking the user's eyes. For example, the calibration procedure may include directing users to look at one or more points displayed on a display while the eye-tracking system records the values that correspond to each gaze position associated with each point.

In some embodiments, eye-tracking subsystem 1306 may use two types of infrared and/or near-infrared (also known as active light) eye-tracking techniques: bright-pupil and dark-pupil eye tracking, which may be differentiated based on the location of an illumination source with respect to the optical elements used. If the illumination is coaxial with the optical path, then eye 1301 may act as a retroreflector as the light reflects off the retina, thereby creating a bright pupil effect similar to a red-eye effect in photography. If the illumination source is offset from the optical path, then the eye's pupil 1322 may appear dark because the retroreflection from the retina is directed away from the sensor. In some embodiments, bright-pupil tracking may create greater iris/pupil contrast, allowing more robust eye tracking with iris pigmentation, and may feature reduced interference (e.g., interference caused by eyelashes and other obscuring features). Bright-pupil tracking may also allow tracking in lighting conditions ranging from total darkness to a very bright environment.

In some embodiments, control subsystem 1308 may control light source 1302 and/or optical subsystem 1304 to reduce optical aberrations (e.g., chromatic aberrations and/or monochromatic aberrations) of the image that may be caused by or influenced by eye 1301. In some examples, as mentioned above, control subsystem 1308 may use the tracking information from eye-tracking subsystem 1306 to perform such control. For example, in controlling light source 1302, control subsystem 1308 may alter the light generated by light source 1302 (e.g., by way of image rendering) to modify (e.g., pre-distort) the image so that the aberration of the image caused by eye 1301 is reduced.

The disclosed systems may track both the position and relative size of the pupil (since, e.g., the pupil dilates and/or contracts). In some examples, the eye-tracking devices and components (e.g., sensors and/or sources) used for detecting and/or tracking the pupil may be different (or calibrated differently) for different types of eyes. For example, the frequency range of the sensors may be different (or separately calibrated) for eyes of different colors and/or different pupil types, sizes, and/or the like. As such, the various eye-tracking components (e.g., infrared sources and/or sensors) described herein may need to be calibrated for each individual user and/or eye.

The disclosed systems may track both eyes with and without ophthalmic correction, such as that provided by contact lenses worn by the user. In some embodiments, ophthalmic correction elements (e.g., adjustable lenses) may be directly incorporated into the artificial reality systems described herein. In some examples, the color of the user's eye may necessitate modification of a corresponding eye-tracking algorithm. For example, eye-tracking algorithms may need to be modified based at least in part on the differing color contrast between a brown eye and, for example, a blue eye.

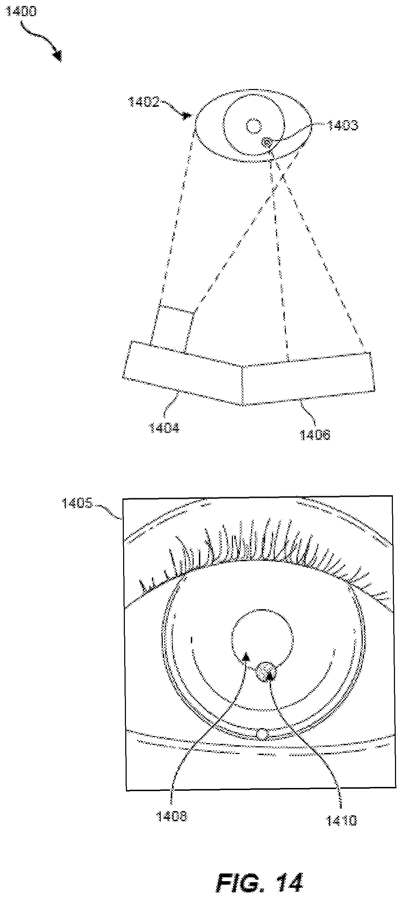

FIG. 14 is a more detailed illustration of various aspects of the eye-tracking subsystem illustrated in FIG. 13. As shown in this figure, an eye-tracking subsystem 1400 may include at least one source 1404 and at least one sensor 1406. Source 1404 generally represents any type or form of element capable of emitting radiation. In one example, source 1404 may generate visible, infrared, and/or near-infrared radiation. In some examples, source 1404 may radiate non-collimated infrared and/or near-infrared portions of the electromagnetic spectrum towards an eye 1402 of a user. Source 1404 may utilize a variety of sampling rates and speeds. For example, the disclosed systems may use sources with higher sampling rates in order to capture fixational eye movements of a user's eye 1402 and/or to correctly measure saccade dynamics of the user's eye 1402. As noted above, any type or form of eye-tracking technique may be used to track the user's eye 1402, including optical-based eye-tracking techniques, ultrasound-based eye-tracking techniques, etc.

Sensor 1406 generally represents any type or form of element capable of detecting radiation, such as radiation reflected off the user's eye 1402. Examples of sensor 1406 include, without limitation, a charge coupled device (CCD), a photodiode array, a complementary metal-oxide-semiconductor (CMOS) based sensor device, and/or the like. In one example, sensor 1406 may represent a sensor having predetermined parameters, including, but not limited to, a dynamic resolution range, linearity, and/or other characteristic selected and/or designed specifically for eye tracking.

As detailed above, eye-tracking subsystem 1400 may generate one or more glints. As detailed above, a glint 1403 may represent reflections of radiation (e.g., infrared radiation from an infrared source, such as source 1404) from the structure of the user's eye. In various embodiments, glint 1403 and/or the user's pupil may be tracked using an eye-tracking algorithm executed by a processor (either within or external to an artificial reality device). For example, an artificial reality device may include a processor and/or a memory device in order to perform eye tracking locally and/or a transceiver to send and receive the data necessary to perform eye tracking on an external device (e.g., a mobile phone, cloud server, or other computing device).

FIG. 14 shows an example image 1405 captured by an eye-tracking subsystem, such as eye-tracking subsystem 1400. In this example, image 1405 may include both the user's pupil 1408 and a glint 1410 near the same. In some examples, pupil 1408 and/or glint 1410 may be identified using an artificial-intelligence-based algorithm, such as a computer-vision-based algorithm. In one embodiment, image 1405 may represent a single frame in a series of frames that may be analyzed continuously in order to track the eye 1402 of the user. Further, pupil 1408 and/or glint 1410 may be tracked over a period of time to determine a user's gaze.

In one example, eye-tracking subsystem 1400 may be configured to identify and measure the inter-pupillary distance (IPD) of a user. In some embodiments, eye-tracking subsystem 1400 may measure and/or calculate the IPD of the user while the user is wearing the artificial reality system. In these embodiments, eye-tracking subsystem 1400 may detect the positions of a user's eyes and may use this information to calculate the user's IPD.

As noted, the eye-tracking systems or subsystems disclosed herein may track a user's eye position and/or eye movement in a variety of ways. In one example, one or more light sources and/or optical sensors may capture an image of the user's eyes. The eye-tracking subsystem may then use the captured information to determine the user's inter-pupillary distance, interocular distance, and/or a 3D position of each eye (e.g., for distortion adjustment purposes), including a magnitude of torsion and rotation (i.e., roll, pitch, and yaw) and/or gaze directions for each eye. In one example, infrared light may be emitted by the eye-tracking subsystem and reflected from each eye. The reflected light may be received or detected by an optical sensor and analyzed to extract eye rotation data from changes in the infrared light reflected by each eye.

The eye-tracking subsystem may use any of a variety of different methods to track the eyes of a user. For example, a light source (e.g., infrared light-emitting diodes) may emit a dot pattern onto each eye of the user. The eye-tracking subsystem may then detect (e.g., via an optical sensor coupled to the artificial reality system) and analyze a reflection of the dot pattern from each eye of the user to identify a location of each pupil of the user. Accordingly, the eye-tracking subsystem may track up to six degrees of freedom of each eye (i.e., 3D position, roll, pitch, and yaw) and at least a subset of the tracked quantities may be combined from two eyes of a user to estimate a gaze point (i.e., a 3D location or position in a virtual scene where the user is looking) and/or an IPD.

In some cases, the distance between a user's pupil and a display may change as the user's eye moves to look in different directions. The varying distance between a pupil and a display as viewing direction changes may be referred to as "pupil swim" and may contribute to distortion perceived by the user as a result of light focusing in different locations as the distance between the pupil and the display changes. Accordingly, measuring distortion at different eye positions and pupil distances relative to displays and generating distortion corrections for different positions and distances may allow mitigation of distortion caused by pupil swim by tracking the 3D position of a user's eyes and applying a distortion correction corresponding to the 3D position of each of the user's eyes at a given point in time. Thus, knowing the 3D position of each of a user's eyes may allow for the mitigation of distortion caused by changes in the distance between the pupil of the eye and the display by applying a distortion correction for each 3D eye position. Furthermore, as noted above, knowing the position of each of the user's eyes may also enable the eye-tracking subsystem to make automated adjustments for a user's IPD.

In some embodiments, a display subsystem may include a variety of additional subsystems that may work in conjunction with the eye-tracking subsystems described herein. For example, a display subsystem may include a varifocal subsystem, a scene-rendering module, and/or a vergence-processing module. The varifocal subsystem may cause left and right display elements to vary the focal distance of the display device. In one embodiment, the varifocal subsystem may physically change the distance between a display and the optics through which it is viewed by moving the display, the optics, or both. Additionally, moving or translating two lenses relative to each other may also be used to change the focal distance of the display. Thus, the varifocal subsystem may include actuators or motors that move displays and/or optics to change the distance between them. This varifocal subsystem may be separate from or integrated into the display subsystem. The varifocal subsystem may also be integrated into or separate from its actuation subsystem and/or the eye-tracking subsystems described herein.

In one example, the display subsystem may include a vergence-processing module configured to determine a vergence depth of a user's gaze based on a gaze point and/or an estimated intersection of the gaze lines determined by the eye-tracking subsystem. Vergence may refer to the simultaneous movement or rotation of both eyes in opposite directions to maintain single binocular vision, which may be naturally and automatically performed by the human eye. Thus, a location where a user's eyes are verged is where the user is looking and is also typically the location where the user's eyes are focused. For example, the vergence-processing module may triangulate gaze lines to estimate a distance or depth from the user associated with intersection of the gaze lines. The depth associated with intersection of the gaze lines may then be used as an approximation for the accommodation distance, which may identify a distance from the user where the user's eyes are directed. Thus, the vergence distance may allow for the determination of a location where the user's eyes should be focused and a depth from the user's eyes at which the eyes are focused, thereby providing information (such as an object or plane of focus) for rendering adjustments to the virtual scene.

The vergence-processing module may coordinate with the eye-tracking subsystems described herein to make adjustments to the display subsystem to account for a user's vergence depth. When the user is focused on something at a distance, the user's pupils may be slightly farther apart than when the user is focused on something close. The eye-tracking subsystem may obtain information about the user's vergence or focus depth and may adjust the display subsystem to be closer together when the user's eyes focus or verge on something close and to be farther apart when the user's eyes focus or verge on something at a distance.

The eye-tracking information generated by the above-described eye-tracking subsystems may also be used, for example, to modify various aspect of how different computer-generated images are presented. For example, a display subsystem may be configured to modify, based on information generated by an eye-tracking subsystem, at least one aspect of how the computer-generated images are presented. For instance, the computer-generated images may be modified based on the user's eye movement, such that if a user is looking up, the computer-generated images may be moved upward on the screen. Similarly, if the user is looking to the side or down, the computer-generated images may be moved to the side or downward on the screen. If the user's eyes are closed, the computer-generated images may be paused or removed from the display and resumed once the user's eyes are back open.

The above-described eye-tracking subsystems can be incorporated into one or more of the various artificial reality systems described herein in a variety of ways. For example, one or more of the various components of system 1300 and/or eye-tracking subsystem 1400 may be incorporated into any of the augmented-reality systems in and/or virtual-reality systems described herein in to enable these systems to perform various eye-tracking tasks (including one or more of the eye-tracking operations described herein).

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a lens that comprises or includes polycarbonate include embodiments where a lens consists essentially of polycarbonate and embodiments where a lens consists of polycarbonate.

## Claims

1. A display system comprising:
an illumination source configured to emit light;
a lens comprising a curved surface; and
a holographic optical element incorporated into the lens, wherein
the holographic optical element forms a diffractive-refractive surface and comprises a vision correction prescription of a user, and
the light emitted from the illumination source is redirected by the diffractive-refractive surface to form a virtual image to be viewed by the user, the light incorporating the vision correction prescription.

2. The display system of claim 1, wherein the illumination source comprises an array of illumination sources; and/or preferably
wherein the illumination source is located outside of a field of view of the user wearing the display system.

3. The display system of claim 1 or claim 2, wherein the holographic optical element comprises at least one of a point-source hologram, an etendue expansion hologram, a set of multiplexed holograms, a layered stack of multiple holograms, or a patterned array of multiple holograms; and/or preferably
wherein the holographic optical element comprises a photosensitive holographic layer.

4. The display system of any preceding claim, wherein the holographic optical element is disposed over an outer surface of the lens.

5. The display system of any preceding claim, wherein the holographic optical element is encoded with prescription data specific to the user and is fabricated based on an ophthalmic measurement of a refractive error of the user; and/or preferably
wherein the holographic optical element is written with a spatially varying prescription profile to provide multifocal or progressive vision correction.

6. The display system of any preceding claim, wherein the vision correction prescription incorporated in the holographic optical element is configured to compensate for at least one of myopia, hyperopia, astigmatism, or presbyopia of the user; and/or preferably
wherein the vision correction prescription is integrated into the holographic optical element after lamination onto the lens, such that the virtual image presented to the user is optically corrected according to the user's prescription.

7. The display system of any preceding claim, wherein the virtual image comprises at least one of content defined by a distribution of the illumination source, or content defined by an encoding of the holographic optical element.

8. A holographic exposure system comprising:
an illumination source emitting light;
a beamsplitter configured to split the emitted light into
a first optical path comprising first prescription adjustment optics, and
a second optical path comprising second prescription adjustment optics; and
a curved holographic optical element located within both the first optical path and the second optical path, wherein
the light split by the beamsplitter propagates through independently configured first prescription adjustment optics and second prescription adjustment optics to illuminate the curved holographic optical element and record a hologram in the holographic optical element, the hologram including a vision correction prescription based on the configuration of the first prescription adjustment optics and the configuration of the second prescription adjustment optics.

9. The holographic exposure system of claim 8, wherein the first prescription adjustment optics and the second prescription adjustment optics comprise equivalent prescription adjustment optics.

10. The holographic exposure system of claim 8 or claim 9, wherein the curved holographic optical element comprises a photosensitive holographic film; and/or preferably
wherein the curved holographic optical element is incorporated into a lens.

11. A display system comprising:
a lens having a curved surface;
a holographic optical element incorporated into the lens;
an illumination source configured to emit light toward the lens;
a beamsplitter positioned to receive light from the illumination source and divide the light into a first optical path and a second optical path;
a first set of prescription adjustment optics positioned along the first optical path;
and
a second set of prescription adjustment optics positioned along the second optical
path,
wherein the holographic optical element is configured to record a hologram based on light received from both the first and second optical paths, the hologram incorporating vision correction prescription data specific to a user.

12. The display system of claim 11, wherein the lens comprises a non-planar geometry selected to match prescription requirements of the user, and the holographic optical element conforms to the curved surface of the lens.

13. The display system of claim 11 or claim 12, wherein the beamsplitter is positioned between the illumination source and the lens, and the beamsplitter is configured to divide the emitted light into two spatially separated optical paths directed toward distinct regions of the holographic optical element.

14. The display system of any one of claims 11 to 13, wherein the holographic optical element is laminated directly onto the curved surface of the lens, forming a continuous diffractive-refractive interface for redirecting light from the illumination source.

15. The display system of any one of claims 11 to 14, wherein the first and second set of prescription adjustment optics each comprise at least one of a lens, a diffuser, a micro lens array, or a mask, each configured to refine spatial filtering, beam shaping, or exposure characteristics of the light in the respective first and second optical paths prior to illumination of the holographic optical element.
